# EUROPEAN PATENT APPLICATION

(11) **EP 2 730 403 A1**
(43) Date of publication of application: **14.05.2014**
(21) Application number: 13192574.5
(22) Date of filing: 12.11.2013
(51) Int. Cl.: B32B 7/04, B32B 7/12, B32B 25/00, B32B 27/00, B32B 27/06, B32B 27/08, B32B 27/16, B32B 27/18, B32B 27/24, B32B 27/32, B32B 27/30, C09D 127/00, B41M 7/00

(54) **Printed films for packaging and packages obtained therefrom.**

(30) Priority: 12.11.2012 EP 12192283
(71) Applicant: Cryovac, Inc., Duncan, SC 29334-0464 (US)
(72) Inventor: Perego, Vittorio, I-21052 Busto Arsizio (VA) (IT); Cantoni, Roberto, I-20090 Segrate (MI) (IT); Lucas, Patrick, 28000 Chartres (FR)
(74) Representative: Fraire, Cristina

(57) **Abstract**

Printed films, composites and packages in which an image is printed between two sealing surfaces (trap print) are disclosed.Thanks to a peculiar coating applied onto the printed surface, sealing strength and package hermeticity are preserved.

## Description

### Field of the Invention

The present invention refers to printed films, composites and packages in which an image is printed between two sealing surfaces (trap print). Thanks to a peculiar coating applied onto the printed surface, sealing strength and package hermeticity are preserved.

### Background of the Invention

EP690012 describes a double lidded barrier package for fresh meat products where the meat product is loaded onto a support member, such as a tray, and the package is then closed by applying an inner oxygen-permeable film over the product and the support member and an outer oxygen-impermeable film over the oxygen-permeable one. Due to a minimum gap between the two films, the oxygen contained in the package will have access to the entire surface of the meat product, thus preventing discoloration of the fresh meat also when the packaged meat extends upwardly with respect to the height of the tray walls.

WO2006/087125 describes an advantageous method for manufacturing said double lidded barrier package in which the oxygen permeable and impermeable films, provided to the packaging line as a composite wound up on a single supply roll, are then unwound, separated and superposed again, before entering into the lidding station for the sealing step.

In this kind of package, it is particularly important that the two lidding films are capable of forming a strong, hermetic seal with each other and with the support member. This is true even where the sealing area of the tray may be exposed or contaminated with by-products (e.g., meat purge) from the packaged food. This is also true where, as is commonly the case, the support member is relatively rigid.

In order to heat seal the two lids to the support member, a heated bar engages the outside of the lids to compress them against the flange of the support member. In doing so, heat transfers from the heated bar to the outside of the lids, through the thickness of the lids, to the inside sealant layer of the lid, and to the flange of the support member. The resulting heat and compression causes all the contacting surfaces, namely those facing each other between the two films and those between the internal film and the support member respectively, to become molten and to intermix with one another. The heating bar is then removed to allow the sealed area to cool and form a sealed bond.

In general, it may be desirable to provide a printed image on food packages for branding or other informational purposes.

Such printing provides important information to the end-user of the packaged food - information such as the ingredients of the packaged food, the nutritional content, package opening instructions, food handling, preparation and storage recommendations. The printing may also provide a pleasing image and/or trademark or other advertising information to enhance the retail sale of the packaged product.

Such printed information may be placed on the outside surface of the outer film. However, such surface printing is directly exposed to a heated bar during the heat seal operation that seals the lid to the support member. As a result, the surface printing may become smeared or otherwise degraded. A surface printing is also exposed to other physical abuses during distribution and display of the packaged product. Such abuse may also degrade the clarity and presentation of the printed image.

On the other hand, for safety reasons, it is undesirable for the printed ink to directly contact the meat packaged product, so printing onto the internal surface of the inner gas permeable film is a less attractive solution.

As an alternative, the image can be trap-printed between the two lidding films, namely it can be printed on anyone of the two surfaces which directly face each other in the coupled film.

However, trap printing shows some drawbacks concerning, in particular, printability along the circumferential sealing area.

In fact the presence of common printing inks within the sealing area between two corresponding sealing surfaces reduces the sealing strength and may cause loss of hermeticity and undesirable leakages from the final package This is true not only for the above specific double lidded packages characterized by two facing films sealed onto a support but also for common tray lidding packaging in which a film and a support are sealed together or for double lidded bags, with or without a support, or even for common single wall pouches and bags in which the printed film is sealed onto itself.

In particular referring to the above double lidded system for fresh red meat, maintenance of the correct atmosphere is particularly important as the appealing color of the product is strictly dependent on a proper oxygen presence and its circulation within the whole package.

In this context, a very tight seal and, consequently, a good package hermeticity are essential factors for the correct functioning of the system.

For this reason, double lidded fresh meat packages according to EP690012 and W02006/087125 have been so far manufactured with no printed images along the sealing area. In particular, they have only been printed within the area delimited by the surrounding seal and not in correspondence of said sealing area..

The same drawbacks can also occur for any packaging system in which a trap print image between two facing surfaces to be sealed together is present, irrespective of the presence of a support, for example also in case of double walled bags as those described in EP755875A1.

From the practical standpoint, limiting the printing during assembly of a package, in particular of the present double lidded package, to areas other than the sealing area it is neither technically simple - as it requires a very precise image registering - nor aesthetically appealing in terms of final appearance of the package as large areas of the surface remains unprinted.In case ready applications, the absence of printing images in the areas around the sealing may become a problem, for example when fresh red meat is packaged and the packages are displayed vertically: in this situation the juices released from the meat will accumulate in the lowest portion of the package and, in the absence of any printed image, will be visible to the customer.

So in general for packaging systems in which an image has to be trap printed between two facing sealing surfaces, but even more with reference to the double lidded packages mentioned above, it would be highly desirable if a film full printed onto the surface facing the second sealing surface could be used irrespective of the presence and positioning of a sealing area between said films.

Further, when the films with trap print images are stored wounded together in a single supply roll, as for instance in the manufacturing of the above double lidded package according to the process described in WO2006/087125, an undesired antifog migration within the roll may occur.

In particular, during the storage of the roll, the antifog may partially migrate between the surfaces of the two films that are in reciprocal tight contact within the roll. As a result, when the roll is unwound, a new fuzzy image named "ghost image" may result with a final unsatisfactory package appearance.

The Applicant during development of the present double lidded package, has therefore thoroughly investigated this packaging system and its sealability drawbacks in case of printing along the sealing area (also called "print in seal") with the aim to find a way to manufacture full printed double walled packages, while keeping seal integrity and avoiding antifog transfer within the roll.

First, the Applicant tried conventional inks for print in seal experiments but, as mentioned above, he detected unsatisfactory seal strength values.

Further, he considered an alternative approach and found that using for print in seal trials conventional inks coated with conventional heat sealable coatings known in the art, sealing performances were insufficient as well.

This conventional heat sealable coatings are known and are commonly used to produce primary packaging for the candy, snack or ice cream markets. Generally they are non-aqueous based and comprise polymers other than polyolefins.

In US7673564 they are used to preserve the bond between a liner film and a tray when an image is trap printed in between.

In conclusion, for this kind of double lidded package but also for any other packaging system in which a first film is sealed onto a second sealing surface, trap printing in the correspondence of the sealing area results to be particularly troublesome and a valuable and practicable solution to this printing problem is still needed.

### Summary of the Invention

The Applicant has surprisingly found that by applying a specific heat sealable coating onto an ink image printed onto the surface of a film facing a second surface and/or or applying said coating onto the second surface in the area facing the ink image printed onto the surface of the film an unexpected high seal strength is achieved when the two surfaces are sealed together, notwithstanding the presence of inks within the sealing area.

The present invention thus provides a simple and practicable solution to the problem of printing also along the sealing area of a sealed package and has several advantages: first, a full printed film may be advantageously used, the resulting packaging will be more attractive not only for purely esthetical reasons, due to less limitation in the positioning of the printed images, but also because, when fresh red meat packages are exposed vertically in the shelves, a printed image may mask the unpleasant meat fluids that accumulate at the bottom of the package. Further, printing also in the sealing areas provides for more space for showing product information to the customer. Finally, this specific heat sealable coating also prevents ink migration within the roll, when the film is stored wound in a roll.

Aqueous based coatings to cover printed images are known from EP1698480, W02008128861 and US6528127. Said aqueous coatings are different from the aqueous coating disclosed in the present invention with respect to the dispersing agent used, as said dispersing agent does not comprise at least one carboxylic acid.

It is thus a first object of the present invention a printed packaging film comprising two outer surfaces, in which at least one of said outer surfaces is a first printed surface, which is ink printed at least in the correspondence of a portion of said surface and
which is over coated at least in the correspondence of the same printed portion with a coating obtainable by applying a composition comprising an aqueous dispersion comprising (A) at least one thermoplastic resin; (B) at least one dispersing agent; and (C) water,
wherein said dispersing agent (B) comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer.
It is a second object of the present invention a composite of two packaging films comprising
a first film according to the first object of the present invention having a first at least partially ink printed over coated surface, and
a second film,
wherein, in the composite, said first at least partially ink printed over coated surface of the first film faces the second film.

Specifically, said second object of the present invention is a composite of two packaging films comprising:
a first film according to the first object of the present invention, and
a second film,
said first film having a first surface which is intended to be sealed to a second surface of the second film through a sealing area said first surface being ink printed at least in the correspondence of the sealing area and being over coated at least in the correspondence of the same sealing area with a coating obtainable by applying a composition comprising an aqueous dispersion comprising (A) at least one thermoplastic resin; (B) at least one dispersing agent; and (C) water,
wherein in the composite said first ink printed over coated surface of the first film faces the second surface of said second film.

Alternatively the coating can be applied onto the surface of the packaging article (film, support etc) to which the first film will be sealed to, at least in the area which in the end package will be sealed to the printed area of the first printed film, namely the sealing area. In one embodiment the second surface is preferably the surface of a film, single or composite. In another embodiment, the second surface is the surface of a support, preferably a tray.

It is thus a third object of the present invention a composite of two packaging films comprising
a first film comprising two outer surfaces, in which at least one of said outer surfaces is a first printed surface which is ink printed at least in the correspondence of a portion of said surface , and
a second film, comprising two outer surfaces, in which at least one of said outer surfaces is a second surface which is at least partially over coated with a coating obtainable by applying a composition comprising an aqueous dispersion comprising (A) at least one thermoplastic resin; (B) at least one dispersing agent; and (C) water,
wherein said dispersing agent (B) comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer, and wherein, in the composite, the first at least partially ink printed surface of said first film faces the corresponding second at least partially over coated second surface of said second film.

It is a fourth object of the present invention a supply roll of a composite according to the second or to the third object of the present invention.

It is a fifth object of the present invention a kit for packaging comprising at least a first film according to the first object of the present invention; or a composite according to the second or third object of the present invention; and a support.

It is a sixth object of the present invention a printed package comprising a printed packaging film according to the first object of the present invention or a composite according to the second or third object of the present invention and a product packaged therein.

Processes for manufacturing a package are the seventh object of the present invention, in particular a process for manufacturing a package in which a film and/or a composite and/or a supply roll, according to the above objects, is used.

An additional process of the present invention is a process for manufacturing a package comprising
- providing a printed packaging film comprising two outer surfaces;
- in which at least one of said outer surfaces is a first printed surface which is ink printed at least in the correspondence of the sealing area;
- providing a coating composition comprising an aqueous dispersion comprising (A) at least one thermoplastic resin; (B) at least one dispersing agent; and (C) water;
- wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer;
- applying said coating composition at least in the correspondence of the sealing area of said first ink printed surface;,
- providing a packaging article, having a second surface, and
- sealing said ink printed coated first surface to the second surface of the packaging article along the sealing area.

An other additional process of the present invention is a process for manufacturing a package comprising:
- providing a printed packaging film comprising two outer surfaces;
   in which at least one of said outer surfaces is a first printed surface which is ink printed at least in the correspondence of the sealing area;
- providing a packaging article, having a second surface;
- providing a composition comprising an aqueous dispersion comprising (A) at least one thermoplastic resin; (B) at least one dispersing agent; and (C) water;
   wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer;
- applying said composition at least in the correspondence of the sealing area of the second surface of the packaging article, and
- sealing said first ink printed surface of said film to said second coated surface of said packaging article along the sealing area.

Preferably, in a process for manufacturing a package as described above, the packaging article is a second film comprising two outer surfaces, in which at least one of said outer surfaces is a second sealable surface suitable to be sealed to the first sealable surface of the first film through a sealing area.

Also preferably in a process for manufacturing a package as described above, said dispersion has a volume average particle size lower than 5 microns, preferably ranging between 0.5 and 4.5, more preferably between 0.5 and 3.0, even more preferably between 0,5 and 1,5 microns.

Also preferably, in a process for manufacturing a package as described above, said dispersion has a dry content ranging from 20% to 70%, preferably from 30% to 60 %, still more preferably from 40% to 55 %.

Also preferably, in a process for manufacturing a package as described above, the packaging article is a film or a tray.

It is a eighth object of the present invention the use of a composition comprising an aqueous dispersion comprising (A) at least one thermoplastic resin; (B) at least one dispersing agent; and (C) water,
wherein said dispersing agent comprises at least one carboxylic acid, at least one salt of at least one carboxylic acid,
at least one carboxylic acid ester, or at least one salt of at least one carboxylic acid ester, more preferably the dispersing agent is an ethylene acrylic acid copolymer or an ethylene methacrylic acid copolymer for coating at least a portion of an at least partially ink printed surface of a packaging film or a packaging article.

It is a nineth object of the present invention a method to increase the strength of the sealing between a first printed surface of a packaging film, which is ink printed at least in the sealing area, and a second surface of a packaging article which comprises
coating, said first ink printed surface, and/or said second surface at least along the sealing area with a composition comprising an aqueous dispersion comprising (A) at least one thermoplastic resin; (B) at least one dispersing agent; and (C) water
wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer, and sealing said film to said packaging article along the sealing area.

Preferably, in the method to increase the strength of the sealing described above, the packaging article is a second film and the strength of the seal between the two films in the sealed area is higher than 100 g/25 mm, preferably higher than 200 g/25 mm, more preferably higher than 300 g/25 mm, even more preferably higher than 400 g/25 mm, said strength being measured according to the test reported in the present description.

Most preferred is a process as described above, or a use as described above, or a method to increase the strength of the sealing as described above, in which said aqueous dispersion is further characterized by
- a pH of less than 12, and/or
- comprising at least one thermoplastic resin (A) selected from the group consisting of:
   a) a thermoplastic resin (A) comprising a copolymer of ethylene with at least one comonomer selected from the group consisting of a C4-C20 linear, branched or cyclic diene, vinyl acetate, and a compound represented by the formula H2C=CHR wherein R is a C1-C20 linear, branched or cyclic alkyl group or a C6-C20 aryl group,
   b) a thermoplastic resin (A) comprising a copolymer of propylene with at least one comonomer selected from the group consisting of ethylene, a C4-C20 linear, branched or cyclic diene, and a compound represented by the formula H2C=CHR wherein R is a C1-C20 linear, branched or cyclic alkyl group or a C6-C20 aryl group, and/or
- a volume average particle size lower than 5 microns, preferably ranging between 0.5 and 4.5, more preferably between 0.5 and 3.0, even more preferably between 0,5 and 1,5 microns, and/or
- a dry content ranging from 20% to 70%, preferably from 30% to 60 %, still more preferably from 40% to 55%.

These and other objects, advantages, and features of the invention will be more readily understood and appreciated by reference to the detailed description of the invention and the drawings.

### Brief Description of the Drawings

Fig. 1 is a sectional view of a full printed full coated packaging film according to the present invention
Fig. 2 is a cross sectional view of a full printed and partially frame coated packaging film according to the present invention (section along the transverse direction when the film is unwound from the roll)
Fig. 3 is a perspective view of a partially frame coated packaging film according to the present invention when unwound from a roll before entering the sealing station
Fig. 4 is a view of an orthogonal section with respect to the base of the tray along the major axis of a double lidded package according to EP690012 and W02006/087125
Fig. 5 is an enlarged view of a section across the sealing area of the package of fig 4 (encircled area) in which the external barrier film is full printed onto the surface facing the second film and coated over the printed surface only along the sealing area.
Fig. 6 is a schematic representation of the sequence of components in a double walled package according to EP690012 or W02006/087125 in which a full coated full printed packaging film is used as outer film.
Fig. 7 is a scheme representing a possible process according to the present invention for the manufacture of the double lidded package described in EP690012 or WO2006/087125 in which the outer barrier film and the composite resulting by coupling said outer barrier film with an inner permeable film are in line with the present invention
Fig. 8 is a representation of a double walled pouch as described in EP755875A1 comprising a film and a composite according to the present invention.
Fig. 9 is a schematic cross section of a possible packaging machine for carrying out the process of the invention, in which a supply roll, a composite and a full coated printed packaging film, according to the invention are used.
Fig. 10 is an enlarged view of the encircled section of fig. 9.
Fig. 11 is a schematic representation of a possible process according to the present invention for the manufacture of a package in which a composite according to the third object of the present invention is used.

### Detailed Description of the Invention

### Definitions

With the term "packaging article", films, sheets or supports substantially made of plastics, suitable for packaging are meant. In addition also articles not substantially made of plastic such as paper, cardboard or aluminium sheets, trays etc, are meant. These alternative materials may be covered with a plastic heat sealable layer or not. In this last case, sealability may be imparted by the coating obtained by applying the present composition onto the first surface of the first film to which the packaging article will be sealed.

As used herein, the term "package" refers to the combination of all of the various components used in the packaging of a product, i.e., all components of the packaged product other than the product within the package. The package is inclusive of, for example, a rigid support member, all films used to surround the product and/or the rigid support member, an absorbent component such as a soaker pad, and even the atmosphere within the package, together with any additional components used in the packaging of the product.

As used herein, the phrase "packaged meat product" refers to any product at least a portion of which comprises meat, the product being contained in a package.

As used herein, the phrase "product-containing package" refers to a package having a product contained therein.

As used herein, the phrase "product support member" refers to a component of a package on which a product is directly placed, i.e., immediately under the product, which the product directly contacts. Meat products are typically supported on a tray-like package component, typically comprising expanded polystyrene sheet material, which may be thermoformed into a tray or other shape, for supporting the meat product. With the term support, semi-rigid or rigid, foamed and non-foamed, trays or flat sheets are generally meant.

As used herein the terms "rigid" and "semi-rigid" when referred to the support members are meant to refer to either flat or tray-shaped supports that are capable of supporting themselves and have a specific shape, size and - if tray-shaped - volume, wherein, however, the shape of the "semi-rigid" supports may be reversibly changed by the application of a small pressure, while the "rigid" supports can tolerate a certain amount of physical forces without being deformed. Support members can be flat and have any desired shape, e.g. squared, rectangular, circular, oval, etc., or preferably they are tray-shaped with a base or bottom portion that can have any desired shape as seen above and side-walls extending upwardly and possibly also outwardly from the periphery of said base portion, and ending with a flange surrounding the top opening. The support members for use in the packaging method of the present invention may be mono-layer or multi-layer structures, either foamed, partially foamed or solid.

As used herein, the phrase "sealing area" in relation to a film, a composite, a packaging article, a support or a tray identify the area which will be sealed in the final package.

As used herein, the phrase a first element "intended to be sealed to" a second element, wherein said elements can be a surface, a film, a composite, a packaging article, a support or a tray and their combinations" refers to the fact that these elements will be sealed together in the final package along the sealing area.

The sealing area in the elements corresponds to the sealed area in the final package.

For all the definitions non expressly reported in this description relating to the specific packages, uses and processes described in EP690012 and W02006/087125 reference is made to the definitions and explanations therein disclosed.

As used herein, the term "film" is inclusive of plastic web, regardless of whether it is film or sheet or tubing.

As used herein, the terms "inner layer" and "internal layer" refer to any film layer having both of its principal surfaces directly adhered to another layer of the film.

As used herein, the phrase "outer layer" or "external layer" refers to any film layer having only one of its principal surfaces directly adhered to another layer of the film.

As used herein, the phrases "seal layer", "sealing layer", "heat seal layer", and "sealant layer", refer to an outer layer involved in the sealing of the film to another packaging article which may be the layer itself, another layer of the same or another film, and/or another plastic article which is not a film.

As used herein, the words "tie layer" or "adhesive layer" refer to any inner film layer having the primary purpose of adhering two layers to each other.

As used herein, the phrase "machine direction", herein abbreviated "MD" or "longitudinal direction", herein abbreviated "LD", refers to a direction "along the length" of the film, i.e., in the direction of the film As used herein, the phrase "transverse direction", herein abbreviated "TD", refers to a direction the film, perpendicular to the machine or longitudinal direction.

As used herein, the term "polymer" refers to the product of a polymerization reaction, and is inclusive of homo-polymers, and copolymers.

As used herein, the term "homo-polymer" is used with reference to a polymer resulting from the polymerization of a single monomer, i.e., a polymer consisting essentially of a single type of mer, i.e., repeating unit.

As used herein, the term "copolymer" refers to polymers formed by the polymerization reaction least two different monomers. For example, the term "copolymer" includes the copolymerization reaction of ethylene and an alpha - olefin, such as 1-hexene. When used in generic terms the term "copolymer" is inclusive of, for example, ter-polymers. The term "copolymer" is also inclusive of random copolymers, block copolymers, and graft copolymers.

As used herein, the phrase "heterogeneous polymer" or "polymer obtained by heterogeneous catalysis" refers to polymerization reaction products of relatively wide variation in molecular weight and relatively variation in composition distribution, i.e., typical polymers prepared, for example, using conventional Ziegler-catalysts. Heterogeneous catalyzed copolymers of ethylene and an -olefin may include linear low-density polyethylene, very low-density polyethylene and ultra-low- density polyethylene.

As used herein, the phrase "homogeneous polymer" or "polymer obtained by homogeneous catalysis" refers to polymerization reaction products of relatively narrow molecular weight distribution and relatively composition distribution. Homogeneous polymers are structurally different from heterogeneous polymers, in homogeneous polymers exhibit a relatively even sequencing of co-monomers within a chain, a mirroring of sequence distribution in all chains, and a similarity of length of all chains, i.e., a narrower molecular weight distribution. This term includes those homogeneous polymers prepared using metallocenes, or other single-site type catalysts, as well as those homogenous polymers that are obtained using Ziegler Natta catalysts in homogenous catalysis conditions.

As used herein, the term "polyolefin" refers to any polymerized olefin, which can be linear, branched, cyclic, aliphatic, aromatic, substituted, or unsubstituted. More specifically, included in the term polyolefin are homo-polymers of olefin, copolymers of olefin, copolymers of an olefin and an non-olefinic co-monomer copolymerizable with the olefin, such as vinyl monomers, modified polymers thereof, and the like. Specific examples include polyethylene homo-polymer, polypropylene homo-polymer, polybutene homo-polymer, ethylene-alpha-olefin which are copolymers of ethylene with one or more -olefins (alpha-olefins) such as butene-1, hexene-1, octene-1, or the like as a comonomer, and the like, propylene-alpha -olefin copolymer, butene-alpha -olefin copolymer, ethylene-unsaturated ester copolymer, ethylene-unsaturated acid copolymer, (e.g. ethylene-ethyl acrylate co- polymer, ethylene-butyl acrylate copolymer, ethylene-methyl acrylate copolymer, ethylene-acrylic acid copolymer, and ethylene-methacrylic acid copolymer), ethylene-vinyl acetate copolymer, ionomer resin, polymethylpentene, etc.

As used herein the term "ionomer" refers to the products of polymerization of ethylene with an unsaturated organic acid, and optionally also with an unsaturated organic acid (C1-C4)-alkyl ester, partially neutralized with a mono-or divalent metal ion, such as lithium, sodium, potassium, calcium, magnesium and zinc. Typical unsaturated organic acids are acrylic acid and methacrylic acid which are thermally stable and commercially available. Unsaturated organic acid (C1-C4)-alkyl esters are typically (meth)acrylate esters, e.g. methyl acrylate and isobutyl acrylate. Mixtures of more than one unsaturated organic acid comonomer and/or more than one unsaturated organic acid (C1-C4)-alkyl ester monomer can also be used in the preparation of the ionomer.

As used herein the term "modified polyolefin" is inclusive of modified polymer prepared by co- polymerizing the homo-polymer of the olefin or copolymer thereof with an unsaturated carboxylic acid, e.g., maleic acid, fumaric acid or the like, or a derivative thereof such as the anhydride, ester or metal salt or the like. It is also inclusive of modified polymers obtained by incorporating into the olefin homo-polymer or copolymer, by blending or preferably by grafting, an unsaturated carboxylic acid, e.g., maleic acid, fumaric acid or the like, or a derivative thereof such as the anhydride, ester or metal salt or the like.

As used herein, the term "adhered" is inclusive of films which are directly adhered to one another using a heat-seal or other means, as well as films which are adhered to one another using an adhesive which is between the two films. As used herein, the phrase "directly adhered", as applied to layers, is defined as adhesion of the subject layer to the object layer, without a tie layer, adhesive, or other layer therebetween. In contrast, as used herein, the word "between", as applied to a layer expressed as being between two other specified layers, includes both direct adherence of the subject layer to the two other layers it is between, as well as a lack of direct adherence to either or both of the two other layers the subject layer is between,

As used herein the term "gas-barrier" when referred to a layer, to a resin contained in said layer, or to an overall structure, refers to the property of the layer, resin or structure, to limit to a certain extent passage through itself of gases. When referred to a layer or to an overall structure, the term "gas-barrier" is used herein to identify layers or structures characterized by an Oxygen Transmission Rate (OTR evaluated at 23°C and 0 % R.H. according to ASTM D-3985) of less than 500 cm³/ m².day.atm, preferably lower than 100 cm³/ m².day.atm, even more preferably lower than 50 cm³/ m².day.atm.

As used herein the term "gas-permeable" refers to layers, resins and films that show an OTR of at least 2,000 cm3 /m2.d.atm when measured at 23 °C and 0 % of relative humidity, such as for instance at least 2,500 cm3 /m2.d.atm or at least 3,000 cm3/m2.d.atm or at least 3,500 cm3/m2.d.atm, and more preferably at least 4,000 cm3 /m2.d.atm, such as for instance at least 5,000 cm3 /m2.d.atm or at least 8,000 cm3 /m2.d.atm or at least 10,000 cm3 /m2.d.atm, measured according to ASTM D-3985

As used herein, the term "package" is inclusive of packages made from flexible containers or tubes, by placing a product in the article and sealing the article so that the product is substantially surrounded by the heat-shrinkable multilayer film from which the packaging container is made. The term package also includes lidding packages, in which a product is accommodated onto a support, such as a tray or a flat sheet, and one or more films are sealed onto the flange surrounding the tray.

As used herein, the phrase "flexible container" is inclusive of end-seal bags, side-seal bags, L- seal bags, U-seal bags (also referred to as "pouches"), gusseted bags, backseamed tubings, and seamless casings.

As used herein, the term "single walled" packages refers to packages in which a single film according to the present invention is used. The film is placed around (i.e. in the form of bags or pouches- as those obtainable with conventional Vertical Form Fill Seal processes VFFS- or wrapped containers - as those obtainable with conventional Horizontal Form Fill Seal HFFS processes) or over the packaged product (i.e. sealed around onto a surrounding flange of a tray or flat sheet) with the printed and coated side directly facing said product.

As used herein, the term "double walled" packages generally refers to the packages described in EP690012, W02006/087125 or in EP755875A1. In these packages the present film is gas barrier and it is coupled with another gas permeable film; the two films are placed around (i.e. in the form of bags or pouches- as those obtainable with conventional Vertical Form Fill Seal processes VFFS- or wrapped containers - as those obtainable with conventional Horizontal Form Fill Seal HFFS processes) or over the packaged product (i.e. sealed around onto a surrounding flange of a tray or flat sheet) with the printed and coated side indirectly facing said product. As an alternative the gas permeable film may be applied as a skin over the product and the support with conventional VSP processes, then the gas-barrier printed and coated film according to the present invention may be sealed along the sealing area on the tray flange or may overwrap the skin package.

However also double lidded packages in which the outermost film is gas permeable and the innermost film is gas-barrier are also included within the scope of the present invention.

As used herein, the term "bag" refers to a packaging container having an open top, side edges, and a bottom edge. The term "bag" encompasses lay-flat bags, pouches, casings (seamless casings and backseamed casings, including lap-sealed casings, fin-sealed casings, and butt-sealed backseamed casings having backseaming tape thereon). Various casing configurations are disclosed in US6764729 and various bag configurations, including L-seal bags, backseamed bags, and U-seal bags (also referred to as pouches), are disclosed in US6790468.

"Transparent" as used herein means that the material transmits incident light with negligible scattering and little absorption, enabling objects (e.g., packaged food or print) to be seen clearly through the material under typical viewing conditions

The term "antifog film" means a plastic film having at least one surface whose properties have been modified or adapted to have antifog characteristics - that is, a tendency to reduce or minimize the negative effects of moisture condensation. The antifog film may incorporate or have dispersed in effective amounts one or more antifog agents in the plastic film resin before forming the resin into a film. Further, the antifog film may be a laminated film formed from two films laminated together, in which one film has antifog characteristics and the other film may not have antifog characteristics. Also, the antifog film may be multilayered, in which case the antifog agent may be incorporated in one or more of the layers of the film, preferably in one or more of the outer layers of the film. Antifog agents are known in the art, and fall into classes such as esters of aliphatic alcohols, polyethers, polyhydric alcohols, esters of polyhydric aliphatic alcohols, polyethoxylated aromatic alcohols, nonionic ethoxylates, and hydrophilic fatty acid esters.

As used herein, the phrases "heat-shrinkable," "heat-shrink," and the like, refer to the tendency film to shrink upon the application of heat, i.e., to contract upon being heated, such that the size of the film decreases while the film is in an unrestrained state.

With the terms "trap print, trap printing, trap printed" etc printing of images onto the surface of a film which is in front of a second surface of a packaging article, such a packaging article being for example the same film wrapped on itself, a second film, or a support such a rigid or semi-rigid tray or flat sheet, thus resulting in a trapped image, is meant.

With the term "print in seal", printing of an image onto the outer surface of a film within the area intended to be sealed to a second surface of a packaging article is meant.

With the term "reverse print, reverse printing" etc .. printing onto the sealing surface of a packaging film is meant.

As used herein, "(meth)acrylic acid" means acrylic acid and/or methacrylic acid; and "(meth)acrylate" means an ester of (meth)acrylic acid.

As used herein, the term "extrusion lamination" or "extrusion coating" refers to processes by which a film of molten polymer is extruded onto a solid substrate (e.g., a nonwoven), in order to coat the substrate with the molten polymer film to bond the substrate and film together.

As used herein, the term "extrusion" is used with reference to the process of forming continuous shapes by forcing a molten plastic material through a die, followed by cooling or chemical hardening. Immediately prior to extrusion through the die, the relatively high-viscosity polymeric material is fed into a rotating screw of variable pitch, which forces it through the die.

As used herein, the term "coextrusion" refers to the process of extruding two or more materials through a single die with two or more orifices arranged so that the extrudates merge and weld together into a laminar structure before chilling, i.e., quenching. Coextrusion can be employed in film blowing, free film extrusion, and extrusion coating processes.

As used herein, the expression "products derivable from the coating after sealing" refers to by-products derivable from degradation reactions or other products (e.g. cross-linked derivatives or others) derivable by reactions of the coating components under sealing conditions.

Unless otherwise stated, all the percentages are meant to be percentages by weight.

### Detailed description of the invention

It is a first object of the present invention a printed packaging film comprising two outer surfaces, in which at least one of said outer surfaces is a first printed surface, which is ink printed at least in the correspondence of a portion of said surface and
which is over coated at least in the correspondence of the same portion with a coating obtainable by a composition comprising an aqueous dispersion comprising (A) at least one thermoplastic resin; (B) at least one dispersing agent; and (C) water,
wherein said dispersing agent (B) comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer.

When this printed film is wound into a roll, ink migration from the printing surface is advantageously suppressed thanks to the coating, and any undesired ghost effect is thus avoided.

One embodiment of the present film is a printed packaging film comprising two outer surfaces,
in which at least one of said outer surfaces is intended to be sealed to a second surface of a packaging article through a sealing area,
in which said first surface is ink printed at least in the correspondence of the sealing area and is over coated at least in the correspondence of the same sealing area with a coating obtainable with by applying composition comprising an aqueous dispersion comprising (A) at least one thermoplastic resin; (B) at least one dispersing agent; and (C) water,
.wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer.

Preferably, said first surface is printed and coated over the entire surface or said first surface is only coated onto a portion of the printed surface.

More preferably, said portion of the first surface corresponds to the sealed area in the final package.

This films, not only is devoid of any ghost effect when stored as a roll, but it is also particularly advantageous when sealed to a second surface, as the coating covering the printed area in the correspondence of the sealing area provides for a strong bond between the sealed surfaces, notwithstanding the presence of inks within the sealing area.

The packaging film of the present invention is printed at least onto one of the two outer surfaces, preferably only onto the surface which faces the second surface of the packaging article to which it is intended to be sealed. The printed coated image, after sealing of this film with a packaging article, will be trapped between them and, at least in the sealing area, in tight contact with both the film and the packaging article.

The printed image includes one or more conventional inks commonly used for printing plastic films. These inks include radiation-cured inks or cured, thermoset inks.

The film object of the present invention, either as monolayer or as multilayer structure; is printed at least onto the food-side surface at least on a portion, preferably onto the sealing area which is intended to be sealed to a second surface of a packaging article.

Preferably, said film is printed on an area broader than the sealing area.

In one embodiment said film is printed onto the whole food side surface.

Preferably, said film is printed on the food-side surface only.

Processor typically applies a printed image (e.g. printed information) using conventional techniques such as by ink printing. Accordingly, the surface of the film to be printed will be compatible with selected print ink systems.

To form the printed image, one or more layers of ink are printed on the film. The ink is selected to have acceptable ink adhesion, gloss, and heat resistance once printed on the film. Acceptable ink adhesions include at least 50%, preferably at least 60%, more preferably at least 70%, as measured by ASTM D3359-93, as adapted by those of skill in the film printing art.

The ink on the printed film should withstand without diminished performance the temperature ranges to which it will be exposed during packaging and use.

The printed image preferably comprises a water based ink or a solvent based ink, more preferably a solvent based ink.

A solvent-based ink is an ink that cures by evaporation of a solvent rather than by a chemical reaction (as with reactive inks discussed below). Solvent-based inks for use in printing packaging films include a colorant (e.g., pigment) dispersed in a vehicle that typically incorporates a resin (e.g., nitrocellulose, polyamide), a solvent (e.g., an alcohol), and optional additives. Inks and processes for printing on plastic films are known to those of skill in the art. See, for example, Leach & Pierce, The Printing Ink Manual, 5th ed., Kluwer Academic Publishers, 1993) and US5407708.

Examples of solvent-based ink resins include those which have nitrocellulose, amide, urethane, epoxide, acrylate, and/or ester functionalities. Ink resins include one or more of nitrocellulose, polyamide, polyurethane, ethyl cellulose, (meth)acrylates, poly(vinyl butyral), poly(vinyl acetate), poly(vinyl chloride), and polyethylene terephthalate (PET). Ink resins may be blended, for example, as nitrocellulose/polyamide blends (NC/PA) or nitrocellulose/polyurethane blends (NC/PU).

Examples of ink solvents include one or more of water solvent or hydrocarbon solvent, such as alcohols (e.g., ethanol, 1-propanol, isopropanol), acetates (e.g., n-propyl acetate), aliphatic hydrocarbons, aromatic hydrocarbons (e. g., toluene), and ketones. The solvent may be incorporated in an amount sufficient to provide inks having viscosities suitable for the intended use, as known to the skilled person.

The printed image may comprise a reactive ink system.

"Reactive ink systems" include radiation-curable ink systems and thermoset ink systems.

Preferably, the cured ink derived from the reactive ink system forms at least a portion of the surface of the printed image.

A radiation-curable ink system may incorporate one or more colorants (e.g., pigments) with the monomers and oligomer/prepolymers as disclosed for example in "Radiation-curable inks and varnish systems", The Printing Ink Manual, Chapter 11, pp.636-77 (5th ed., Kluwer Academic Publishers, 1993. Useful oligomers/prepolymers include resins having acrylate functionality, such as epoxy acrylates, polyurethane acrylates, and polyester acrylates, with epoxy acrylates preferred. Exemplary oligomers and prepolymers include (meth)acrylated epoxies, (meth)acrylated polyesters, (meth)acrylated urethanes/polyurethanes, (meth)acrylated polyethers, (meth)acrylated polybutadiene, aromatic acid (meth)acrylates, (meth)acrylated acrylic oligomers, and the like.

Application and curing of a radiation-curable ink is conventional. Preferably, each of the inks used to make the printed markings on the film surface are essentially free of photoinitiators, thus eliminating the possibility that such materials may migrate toward and into the product to be packaged.

A thermoset ink system may include one or more colorants (e.g., pigments) dispersed with the reactive components of a thermoset varnish system. Thermoset varnish systems are applied and cured conventionally.

The printed film is preferably transparent (at least in the non-printed regions) so that the packaged item is visible through the film.

The present film may be printed by any suitable method, such as rotary screen, gravure, or flexographic techniques, as is known in the art, preferably by flexographic technique. The printed image is applied to the film by printing the ink on the film, at least on the outer food side of the film, preferably on this side only. If a solvent-based ink (i.e., a non-chemically reactive ink) is applied to the film, the solvent evaporates, leaving behind the resin-pigment combination. The solvent may evaporate as a result of heat or forced air exposure to speed drying. The ink may be applied in layers, each with a different color, to provide the desired effect. For example, a printing system may employ eight print stations, each station with a different color ink.

If a radiation-curable ink or varnish is used, then after application of the pre-reacted ink or varnish to the film, the film is exposed to radiation sufficient to cure the ink or varnish. This polymerizes and/or crosslinks the reactants in the ink or varnish. Preferably UV-light radiation may be used if the radiation-curable ink or varnish is formulated with photoinitiators. An electron beam is a possible alternative form of radiation.

If a thermoset ink is used, then before application the components of the thermoset system are mixed together, typically incorporating a suitable solvent or dispersant. The mixture is then applied using the techniques as discussed above. After application, the thermoset ink is exposed to conditions appropriate to cure (i.e., polymerize and/or crosslink) the system's reactive components. Curing may be effected by elevated temperature conditions. The solvent may also be evaporated at this point.

The printed packaging film of the present invention is coated over the printed image at least in a portion, preferably in the area intended to be sealed to a packaging article.

In one embodiment, the film object of the first embodiment is fully printed and fully coated onto the entire food-side surface.

in another embodiment, said film partially printed and the coating is applied onto the printed area only of the food-side surface

In another embodiment, said film is fully or partially printed but the coating is applied onto the sealing area only of the food-side surface.

In another embodiment , said film is printed and coated only in the correspondence of the sealing area of the food-side surface.

Printing in the sealing area may be partial, so the coating may cover the whole sealing area but may also be limited to the printing areas within the sealing area.

In another embodiment, said t film is only coated onto the printed surface of the sealing area.

The printed film comprises a printed image comprising an outermost ink surface.

A coating is applied over at least a portion of the outermost ink surface, in particular at least onto the sealing area.

In another embodiment, the coating is applied onto the whole printed area.

In another embodiment, the coating is applied onto the entire food-side surface of the film, both on printed and non-printed areas.

The coating may be applied by any of the techniques known in the art, including screen, gravure, flexographic, roll, and metering rod coating print techniques, and by in-line, stack, and central impression configurations, preferably by flexographic techniques, preferably by central impression configurations.

In the printed packaging film of the present invention the first surface is ink printed at least partially in the correspondence of the sealing area and is over coated at least in the correspondence of the printed surface of the same sealing area with a coating obtainable by applying a composition comprising an aqueous dispersion comprising (A) at least one thermoplastic resin; (B) at least one dispersing agent; and (C) water.

Preferably the coating composition consists of the above aqueous dispersion.

The coating compositions are known in the art. They are described for example in W02005/021638 or W02009/055275 under the code DPOD 8501 or are sold by Paramelt under the tradename of Aquaseal.

They are aqueous dispersion comprising (A) at least one thermoplastic resin; (B) at least one dispersing agent; and (C) water.

Preferably the dispersion has a pH of less than 12.

For definitions of (A) and (B) reference is made to W02005/021638.

Preferably, the thermoplastic resin (A) comprises a copolymer of ethylene with at least one comonomer selected from the group consisting of a C₄-C₂₀ linear, branched or cyclic diene, vinyl acetate, and a compound represented by the formula H₂C=CHR wherein R is a C₁-C₂₀ linear, branched or cyclic alkyl group or a C₆-C₂₀ aryl group.

Preferably said copolymer of ethylene has a density of less than about 0.92 g/cc.

Preferably, the thermoplastic resin comprises a copolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group The volume average particle size of the dispersion is generally less than 5 microns, preferably ranges between 0.5 and 4.5, more preferably between 0.5 and 3.0, even more preferably between 0,5 and 1,5 microns.

The dispersion dry content generally ranges from 20% to 70%, preferably from 30% to 60 %, still more preferably from 40% to 55%.

In the dispersion, the dispersing agent is preferably comprised in a percentage by weight lower than 4 % based on the weight of the thermoplastic resin.

The dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer.

For any further composition detail not explicitly reported herein and for manufacturing processes reference is made to W02005/021638.

These aqueous dispersions generally comprise at least water, a pH modifier, a dispersing agent and one or more polyolefins. Optionally, other components generally used within heat sealable layers such as acrylates and/or ethylenevinylacetates may be present. These dispersions generally have a high content of solids up to 60% with an average particle size lower than 5 microns, preferably of approximately 1 micron. Viscosities typically are < 500 cps at ambient temperature and pH generally ranges from 8.5- 12.

Optionally, before application of the present coating, a primer may be applied over the ink printed surface.

Preferred compositions are those sold by Paramelt under the tradenames of Aquaseal, particularly preferred is Aquaseal X 2200.

These polyolefin water-based dispersions may be applied using conventional water-based converting processes such as spraying, roll coating, gravure printing, dipping, impregnation etc. This can provide advantages such as the ability to apply a much thinner coating than with melt processing techniques, the ability to coat at significantly higher line speeds, the ability to coat in a pattern, as well as the ability to apply a polyolefin coating at low temperatures. Preferably, the heat sealable water based coating is applied during the printing process as a last layer over the ink layer(s). The heat sealable coating may be applied in the sealing area only and registered according to the target lidding packaging equipment sealing tool.

As the present coatings can be applied by using very precise deposition techniques, i.e. printing techniques, a selective deposition can be envisaged and tailored according the sealing tooling/packaging equipment used by the final customer.

For example it is possible to apply the coating onto the sealing area only or, even, within the sealing area onto the printed surface only.

In one embodiment, the t printed film object of the first embodiment is fully coated.

In another embodiment, said printed film is only coated onto the sealing area.

In another embodiment, the present said printed film is only coated onto the printed area

In another embodiment, said printed film is only coated onto the printed surface within the sealing area.

Preferably, the coating of the film object of the present invention will be applied in the last printing station of a flexoprinting press with a plate engraved in a frame shaped as the sealing area shape.

The grammage of the coating typically ranges from 0.5 to 3 g/m², preferably from 1 to 3 g/ m², more preferably from 1.5 to 2 g/m².

The printed coated film object of the present invention is preferably transparent (at least in the non-printed regions) so that the packaged item is visible through the film.

The use of these aqueous polymer dispersions in the field of packaging, in particular their use for paper based flexible packaging, is known: these dispersions are generally coated over paper substrates with the aim to provide good barrier properties and to make said substrates heat sealable against themselves and other polyolefin based packaging articles.

However, in the Applicant's knowledge, their use as a heat sealable coating over ink printed plastic surfaces has never been disclosed, in particular with reference to the double walled packages described in EP690012 or W02006/087125.

Surprisingly, the present coating provides for unexpectedly high seal strength values notwithstanding the presence of deleterious inks within the sealing area. In addition, it also prevents undesired ink migrations.

Several other conventional coatings tested by the Applicant were not able to impart an acceptable seal strength. The film object of the present invention may comprise any plastic material, such as a thermoplastic, that is suitable for packaging food products, including biodegradable polymers. Useful plastics include homopolymers, copolymers, terpolymers, and heteropolymers of one or more of polyolefins, polyamides, polyesters, polyvinyls, polystyrenes, polyurethanes, polycarbonates, including polymers such as ethylene/vinyl alcohol copolymers (EVOH), polyvinylidene chlorides, polyalkylene carbonates, and starch-containing polymers.

The film may include one or more polyolefins in an amount of at least 20%, at least 40%, at least 50%, at least 60%, at least 65%, at least 70%, at least 75%, at least 80%, at least 85%, at least 90%, and at least 95% based on the weight of the total film.

Said t film may be monolayer, but preferably includes two or more layers (i. e.,multilayered), so that the layers in combination impart the desired performance characteristics to the film.

Examples of monolayers films suitable for the present invention are monolithic films, preferably biaxially oriented, substantially made of polyesters, polypropylenes, polyamides and the like. In these cases, the film may have scarce sealability per se and sealing property are conferred by the heat sealable coating applied at least onto the sealing area.

Preferably the film is a multilayer film.

Each layer of the film may include one or more thermoplastic materials.

The film may include one or more layers comprising a polymer having mer units derived from ethylene, such as ethylene homopolymers and/or heteropolymers. Exemplary ethylene heteropolymers include those that include mer units derived from one or more of C3-C20 alpha-olefins, vinyl acetate, (meth)acrylic acid, and C1-C20 esters of (meth)acrylic acid. Preferred heteropolymers include heterogeneous and homogeneous ethylene/alpha- olefin copolymers. As is known in the art, heterogeneous polymers have a relatively wide variation in molecular weight and composition distribution. Heterogenous polymers may be prepared with, for example, conventional Ziegler Natta catalysts. On the other hand, homogeneous polymers have relatively narrow molecular weight and composition distributions. Homogeneous polymers are typically prepared using metallocene or other single site-type catalysts. Ethylene/a-olefin copolymers or heteropolymers include medium density polyethylene (MDPE), linear low density polyethylene (LLDPE), and very low and ultra low density polyethylene (VLDPE and ULDPE), which, in general, are prepared by the copolymerization of ethylene and one or more α-olefins. Preferably, the comonomer includes one or more C4-C20 alfa-olefins, more preferably one or more C4-C12 alfa-olefins, and most preferably one or more C4-C8 alfa-olefins. Particularly preferred a-olefins include 1-butene, 1-hexene, 1-octene, and mixtures thereof.

The film may comprise one or more layers, preferably a total of from 2 to 20 layers, more preferably at least 3 layers, even more preferably at least 4 layers, still more preferably at least 5 layers, and most preferably from 5 to 9 layers. A multilayered film may include one or more of each of:
A) an outer food side layer,
B) a core or bulk layer,
C) a gas barrier layer,
D) an outside layer (i.e., abuse layer, het resistant layer etc.) and
E) a tie layer.

Below are some examples of preferred combinations in which the alphabetical symbols designate the resin layers. Where the multilayer film representation below includes the same letter more than once, each occurrence of the letter may represent the same composition or a different composition within the class that performs a similar function.

A/D, A/C/D, A/B/D, A/B/C/D, A/C/B/D, A/B/C/E/D, A/E/C/E/D, A/B/E/C/D, C/B/E/D, A/C/E/B/D, ATE/B/C/D, A/E/CB/D, A/C/B/C/D, A/B/C/B/D, A/B/C/E/B/D, A/B/C/E/C/D, A/B/E/C/B/D, A/C/E/CB/D, A/B/C/B/B/D, A/C/B/B/B/D, A/C/B/C/B/D, A/C/E/B/B/D, A/B/E/C/E/B/D, A/B/E/C/E/B/E/D

The film includes an outside food side layer (A) whose surface is printed and is sealable to a second surface of a packaging article.

Preferably this outer layer is heat sealable - that is, it is a layer adapted to facilitate the heat-sealing of the film to a packaging article, i.e the film itself, another film or a support, such as a tray or a flat sheet. The heat-seal layer is typically an outer layer.

However, the food side printed layer of the present film may also be non-heat sealable per se: in such a case sealability is conferred by the heat sealable coating obtainable by applying the a composition comprising an aqueous dispersion comprising (A) at least one thermoplastic resin; (B) at least one dispersing agent; and (C) water ..wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer...

Food-side layer means that this layer will face the food in the final food package but does not necessarily implies that the layer is in direct contact with the food. In fact in a preferred embodiment of the present package, the film is not in direct contact with the food as a second film is interposed between them.

As an alternative, the printed surface may be the opposite (non-food side) surface.

Where fin seals are used, the film needs only to include a heat-seal layer on the food-side (i.e., inside) of the multilayered film. However, it is possible to also include a heat-seal layer on the non-food side (i.e., outside) of the film -- in particular where the film is constructed in a balanced manner.

Depending on the final use of the present printed coated film, one or both the outer surfaces may have the same or different heat sealability.

The food-side, optionally heat sealable, layer may include one or more thermoplastic polymers including polyolefins (e.g., ethylene homopolymers, such as high density polyethylene ("HDPE") and low density polyethylene ("LDPE"), ethylene copolymers, such as ethylene/alpha-olefin copolymers ("EOAs"), propylene/ethylene copolymers, propylene/alpha- olefin copolymers, ethylene/ unsaturated acid copolymers, and ethylene/unsaturated ester copolymers), polyamides, polyesters, polyvinyl chlorides, and ionomers. Preferred components for the heat seal layer include: i) copolymers of ethylene and vinyl acetate ("EVA") having vinyl acetate levels of from about 5 to 20 weight %, more preferably from about 8 to 12 weight %, and ii) (meth)acrylate polymers such as ethylene/(meth)acrylic acid ("EMAA"), ethylene/acrylic acid ("EAA"), ethylene/n-butyl acrylate ("EnBA"), and the salts of (meth)acrylic acid copolymers ("ionomers").

These polymers can be advantageously blended in various percentages to tailor the sealing properties of the films depending on their use in packaging, as well known by those skilled in the art.

The heat seal/food-side layer may comprise one or more antifog agents, as well as other additives such as antiblock agents. However, the heat seal layer may be devoid of any or all of such agents.

The thickness of the heat seal layer is selected to provide sufficient material to effect a strong heat seal, yet not so thick so as to negatively affect the manufacture (ie., extrusion) of the film by lowering the melt strength of the film to an unacceptable level.

Further, the thickness of the heat seal or food-side layer as a percentage of the total thickness of the film may range from about 1 to about 50 percent, from about 5 to about 45 percent, from about 10 to about 45 percent, from about 15 to about 40 percent, from about 15 to about 35 percent, and from about 15 to about 30 percent.

Preferably the print side layer will be heat sealable, in such a case suitable sealable polymers, preferably polyolefins and their admixtures, are selected to impart the desired sealability.

The printed food side layer may include one or more polyamides, polyesters, polyethylene, and/or homo-copolymers of propylene either alone or in combination, preferably biodegradable polymers, for example, any one of these types of components in an amount of at least 50 weight %, more preferably at least 70%, still more preferably at least 90%, and most preferably 100% by weight of the layer.

The printed food side layer may also be non-heat sealable per se: in such a case, sealability is conferred by the heat sealable coating obtainable by applying the a composition comprising an aqueous dispersion comprising (A) at least one thermoplastic resin; (B) at least one dispersing agent; and (C) water
wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer...

The t film object of the present invention or disclosed therein, when multilayered, comprises an outside (non-food-side) layer D).

Depending on final use of the film, the outside layer in addition to mechanical properties may also provide heat-resistant characteristics to the film to help prevent "burn-through" during heat sealing. This is because in forming a package by conductance heat sealing the film to itself, the heat seal layer is placed in contact with itself, while the outside layer is proximate a heated jaw of a heat sealing apparatus. The heat seal jaw transfers heat through the outside layer to the heat seal layer of the package to soften the heat seal layer and form the heat seal. The thickness of the outside layer may range as a percentage of the total thickness of the film of from 1 to 50 percent, 3 to 45 percent, 5 to 40 percent, 7 to 35 percent, and 7 to 30 percent.

The two outer layers of the present film may be the same or different layers, depending on the kind of package and the final use thereof.

In case of a different composition, the outside layer may comprise one or more polymers that include met units derived from at least one of a C₂-C₁₂ alfa-olefin, styrene, amides, esters, and urethanes.

Preferred among these are those homo- and heteropolymers that include mer units derived from ethylene, propylene, and 1-butene, even more preferably an ethylene heteropolymer such as, for example, ethylene/C3-C8 a-olefin heteropolymer, ethylene/ethylenically unsaturated ester heteropolymer (e.g., ethylene/butyl acrylate copolymer), ethylene/ethylenically unsaturated acid heteropolymer (e.g., ethylene/(meth)acrylic acid copolymer), and ethylene/vinyl acetate heteropolymer. Preferred ethylene/vinyl acetate heteropolymers are those that include from about 2.5 to about 27.5 weight %, preferably from about 5 to about 20%, even more preferably from about 5 to about 17.5% mer units derived from vinyl acetate. Such a polymer preferably has a melt index of from about 0.3 to about 25, more preferably from about 0.5 to about 15, still more preferably from about 0.7 to about 5, and most preferably from about 1 to about 3.

The outside layer D) of the present film comprises any suitable thermoplastic material such as any polyamide, polyester, polyolefin or any blend thereof, including biodegradable polymers.

Suitable "polyesters" for the films of the present invention are those obtained by the polycondensation reaction of dicarboxylic acids with dihydroxy alcohols. Suitable dicarboxylic acids are, for instance, terephthalic acid, isophthalic acid, 2,6-naphthalene dicarboxylic acid and the like. Suitable dihydroxy alcohols are for instance ethylene glycol, diethylene glycol, 1,4-butanediol, 1,4-cyclohexanedimethanol and the like.

Examples of suitable polyesters include amorphous (co)polyesters, poly(ethylene/terephthalic acid), and poly(ethylene/ naphthalate), although poly(ethylene/terephthalic acid) with at least about 75 mole percent, more preferably at least about 80 mole percent, of its mer units derived from terephthalic acid may be preferred for certain applications.

As used herein the term "polyamide" refers to high molecular weight polymers having amide linkages along the molecular chain, and refers more specifically to synthetic polyamides such as nylons. Such term encompasses both homo-polyamides and co-(or ter-) polyamides. It also specifically includes aliphatic polyamides or co-polyamides, aromatic polyamides or co-polyamides, and partially aromatic polyamides or co-polyamides, modifications thereof and blends thereof. The homo-polyamides are derived from the polymerization of a single type of monomer comprising both the chemical functions which are typical of polyamides, i.e. amino and acid groups, such monomers being typically lactams or aminoacids, or from the polycondensation of two types of polyfunctional monomers, i.e. polyamines with polybasic acids. The co-, ter-, and multi-polyamides are derived from the copolymerization of precursor monomers of at least two (three or more) different polyamides. As an example in the preparation of the co-polyamides, two different lactams may be employed, or two types of polyamines and polyacids, or a lactam on one side and a polyamine and a polyacid on the other side.

Exemplary polymers are polyamide 6, polyamide 6/9, polyamide 6/10, polyamide 6/12, polyamide 11, polyamide 12, polyamide 6/12, polyamide 6/66, polyamide 66/6/10, modifications thereof and blends thereof. Said term also includes crystalline or partially crystalline, aromatic or partially aromatic polyamides.

The outer or external layer must also be carefully selected for its heat resistance under sealing conditions during the packaging process. For example it is advantageous to select for this layer a polymer having melting point higher than the sealing temperature.

The present film may include one or more barrier layers C) between the inside and outside layers. A barrier layer reduces the transmission rate of one or more components - for example, gases or vapors or unreacted monomer through the film. Accordingly, the barrier layer of a film that is made into a package will help to exclude one or more components from the interior of the package -- or conversely to maintain one or more gases or vapors within the package.

The barrier layer(s) may include one or more of the following polymers: ethylene/vinyl alcohol copolymer, polyvinyl alcohol, acrylonitrile-butadiene copolymer, isobutylene-isoprene copolymer, polyacrylonitrile, polyvinylidene chloride, highly crystalline polyamide, highly crystalline polypropylene, and highly crystalline polyethylene. The term "highly crystalline" has a meaning generally understood to those of skill in the art. Crystallinity depends on how the film is produced generally a film cooled slowly will have a higher crystallinity than one that is rapidly quenched. Further, a maximum amount of crystallinity exists for polyamides, polypropylenes and polyethylenes that is achieved using the most advantageous time/temperature path for cooling. A component may be considered "highly crystalline" herein if the amount of crystalline molecules is at least 70 weight percent of the maximum amount of crystallinity.

Oxygen (i.e., gaseous O₂) barrier layers may include one or more of the following polymers:
ethylene/vinyl alcohol copolymer ("EVOH"), vinylidene chloride copolymers ("PVDC"), blends of PVdC and
polycaprolactone (as those described in patent EP2064056 B1, example 1 to 7, being particularly useful for respiring food products as some cheeses), polyalkylene carbonate, polyester (e.g., PET, PEN), polyacrylonitrile, and
polyamide. EVOH may have an ethylene content of between about 20% and 40%, preferably between about 25% and 35%, more preferably about 32% by weight. EVOH includes saponified or hydrolyzed ethylene/vinyl acetate copolymers, such as those having a degree of hydrolysis of at least 50%, preferably of at least 85%. A barrier layer that includes PVDC may also include a thermal stabilizer (e.g., a hydrogen chloride scavenger such as epoxidized soybean oil) and a lubricating processing aid (e.g., one or more acrylates). PVDC includes crystalline copolymers,
containing vinylidene chloride and one or more other monomers, including for example vinyl chloride, acrylonitrile,
vinyl acetate, methyl acrylate, ethyl acrylate, ethyl methacrylate and methyl methacrylate.

The barrier layer may optionally comprises one or more oxygen scavengers.

The thickness of the barrier layer may range depending on the desired final desired value of OTR (oxygen transmission rate) and on the resin used.

Said film may include one or more tie layers E).

Tie layers have the primary purpose of improving the adherence of two layers to each other. Tie layers may include polymers having grafted polar groups so that the polymer is capable of covalently bonding to polar polymers such as EVOH. Useful polymers for tie layers include ethylene/unsaturated acid copolymer, ethylene/unsaturated ester copolymer, anhydride-modified polyolefin, polyurethane, and mixtures thereof. Preferred polymers for tie layers include one or more of ethylene/vinyl acetate copolymer having a vinyl acetate content of at least 15 weight %, ethylene/methylacrylate copolymer having a methyl acrylate content of at least 20 weight %, anhydride modified ethylene/methyl acrylate copolymer having a methyl acrylate content of at least 20%, and anhydride-modified ethylene/alpha-olefin copolymer, such as an anhydride grafted LLDPE. Modified polymers or anhydride-modified polymers include polymers prepared by copolymerizing an unsaturated carboxylic acid (e.g., maleic acid, fumaric acid), or a derivative such as the anhydride, ester, or metal salt of the unsaturated carboxylic acid with -- or otherwise incorporating the same into an olefin homopolymer or copolymer. Thus, anhydride-modified polymers have an anhydride functionality achieved by grafting or copolymerization.

The film may include a tie layer directly adhered (i.e., directly adjacent) to one or both sides of an internal gas barrier layer. Further, a tie layer may be directly adhered to the internal surface of the outside layer (i.e., an abuse layer). The tie layers are of a sufficient thickness to provide the adherence function, as is known in the art. Each tie layer may be of a substantially similar or a different composition and/or thickness.

Said film may optionally include other layers. Such a layer may include one or more polymers that include met units derived from at least one of a C2-C12 a-olefin, styrene, amides, esters, and urethanes. Preferred among these are those homo- and heteropolymers that include mer units derived from ethylene, propylene, and 1-butene, even more preferably an ethylene heteropolymer such as, for example, ethylene/C3-C8 a-olefin heteropolymer, ethylene/ethylenically unsaturated ester heteropolymer (e.g., ethylene/butyl acrylate copolymer), ethylene/ethylenically unsaturated acid heteropolymer (e.g., ethylene/(meth)acrylic acid copolymer), and ethylene/vinyl acetate heteropolymer. Preferred ethylene/vinyl acetate heteropolymers are those that include from about 2.5 to about 27.5 weight %, preferably from about 5 to about 20%, even more preferably from about 5 to about 17.5% mer units derived from vinyl acetate. Such a polymer preferably has a melt index of from about 0.3 to about 25, more preferably from about 0.5 to about 15, still more preferably from about 0.7 to about 5, and most preferably from about 1 to about 3.

Said film may include a layer derived at least in part from a polyester and/or a polyamide. Examples of suitable polyesters include amorphous (co)polyesters, poly(ethylene/terephthalic acid), and poly(ethylene/ naphthalate), although poly(ethylene/terephthalic acid) with at least about 75 mole percent, more preferably at least about 80 mole percent, of its mer units derived from terephthalic acid may be preferred for certain applications. Examples of suitable polyamides include polyamide 6, polyamide 9, polyamide 10, polyamide 11, polyamide 12, polyamide 66, polyamide 610, polyamide 612, polyamide 61, polyamide 6T, polyamide 69, heteropolymers made from any of the monomers used to make two or more of the foregoing homopolymers, and blends of any of the foregoing homo- and/or heteropolymers.

One or more layers of the film may include one or more additives useful in packaging films, such as, antifog agents, antiblocking agents, slip agents, colorants, pigments, dyes, flavorants, antimicrobial agents, meat preservatives, antioxidants, fillers, radiation stabilizers, and antistatic agents. Such additives, and their effective amounts, are known in the art.

Said film may have any total thickness as long as it provides the desired properties (e.g., flexibility, Young's modulus, optics, seal strength, gas - barrier, etc .. ) for a given packaging application of expected use. Preferably thickness of the present film will be lower than 100 microns, more preferably lower than 50 microns, even more preferably lower than 25 microns, still more preferably lower than 20 microns.

Said film may be non-oriented.

Said film may be oriented in either the machine (i.e., longitudinal) or the transverse direction, preferably in both directions (i. e., biaxially oriented). Preferably, the film is oriented in at least one direction by a ratio of at least 2.5:1, from about 2.7:1 to about 10:1, at least 2.8:1, at least 2.9:1, at least 3.0:1, at least 3.1:1, at least 3.2:1, at least 3.3:1, at least 3.4:1, at least 3.5:1, at least 3.6:1, and at least 3.7:1.

Said may be heat shrinkable.

Shrinking behavior may be tailored depending on the final package application.

For example in case the film object of the present invention is used for manufacturing shrinkable bags for meat packaging, total free shrink at 85°C of at least about (in ascending order of preference) 5%, 10%, 15%, 40%, 50%, 55%, 60%, and 65% is desirable.

For example in case said film is used for manufacturing shrinkable lids for case ready applications a total free shrink at 120°C not higher than 10%, preferably not higher than 5% is desirable.

The total free shrink is determined by summing the percent free shrink in the machine (longitudinal) direction with the percentage of free shrink in the transverse direction.

Although preferred, it is not required that the film have shrinkage in both directions.

The free shrink of the film is determined by measuring the percent dimensional change in a 10 cm x 10 cm film specimen when subjected to selected heat (i.e., at a certain temperature exposure) according to ASTM D 2732.

As is known in the art, a heat-shrinkable film shrinks upon the application of heat while the film is in an unrestrained state. If the film is restrained from shrinking -- for example by a packaged good around which the film shrinks then the tension of the heat-shrinkable film increases upon the application of heat. Accordingly, a heat-shrinkable film that has been exposed to heat so that at least a portion of the film is either reduced in size (unrestrained) or under increased tension (restrained) is considered a heat-shrunk (i. e., heat- contracted) film.

The film may exhibit a shrink tension in at least one direction. Again depending on the application, a different maximum value of shrink tension will be imparted to provide for a tight package but without undesired tray distortions. The printed film of the present invention may be annealed or heat-set to reduce the free shrink either slightly, substantially, or completely; however, the film may not be heat set or annealed once stretched if it is desired that the film have a high level of heat shrinkability.

The film object of the present invention may be manufactured by a variety of processes known in the art, including extrusion (e.g., blown-film extrusion, coextrusion, extrusion coating, free film extrusion, and lamination), casting, and adhesive lamination. A combination of these processes may also be employed. These processes are well-known to those of skill in the art. For example, extrusion coating is described in US4278738. Coextrusion manufacture may use, for example, a tubular trapped bubble film process or a flat film (i.e., cast film or slit die) process.

One or more of the thermoplastic layers of the film -- or at least a portion of the entire film -- may be cross-linked to improve the strength of the film, improve the orientation of the film, and help to avoid burn through during heat seal operations. Cross-linking may be achieved by using chemical additives or by subjecting the film layers to one or more energetic radiation treatments such as ultraviolet, X-ray, gamma ray, beta ray, and high energy electron beam treatment to induce cross-linking between molecules of the irradiated material. The film may be exposed to radiation dosages of at least 5, preferably at least 7, more preferably at least 10, most preferably at least 15 kGy (kiloGrey). The radiation dosage may also range from 5 to 150, more preferably from 5 to 100, and most preferably from 5 to 75 kGy.

To improve the adhesion of the ink to the surface of the film, all or a portion of the surface of the film to be printed may be treated or modified before printing to change the surface energy of the film. Surface treatments and modifications include: i) mechanical treatments, such as corona treatment, plasma treatment, and flame treatment, and ii) primer treatment. Surface treatments and modifications are known to those of skill in the art.

Preferably, the film object of the present invention is corona treated.

Said film may be treated to have a surface tension of at least 38 dynes/cm , preferably of about 42 dynes/cm.

A primer may be also applied, preferably a primer based on any of the ink resins discussed herein, preferably an ethylene vinyl acetate (EVA) resin.

The printed coated film object of the present invention, once formed into a package is preferably capable of withstanding normal packing, distribution, and handling with minimal ink loss from the coated, printed film. Preferably, the film is capable of being flexed or shrunk without cracking or degrading the coating or distorting or removing the printed image.

The printed coated packaging film of the present invention is intended to be sealed to a second surface of a packaging article through a sealing area.

The second surface is preferably a heat sealable surface, preferably a sealing surface polyolefin based. However in case the second surface is not heat sealable per se, sealability may be provided by the heat sealable coating that is deposited onto the first printed surface when this first surface is coupled and sealed to the second surface.

With packaging article the same film, another film or a support, such as a tray or a flat sheet are meant. In case the sealing is performed onto the same film, both the options of sealing onto the same outer surface or onto the other one are included.

The packaging article whose surface is the second surface as defined above may be a full plastic article (i.e. full plastic monolayer or multilayer film or full plastic rigid or foam tray) or a structure substantially made from another material (i.e. aluminium, paper etc..) suitably lined with a plastic material (liner).

In case of a paper or aluminium based support, the same coating composition may be advantageously used for coating both the surfaces involved in the seal.

With reference to the drawings,

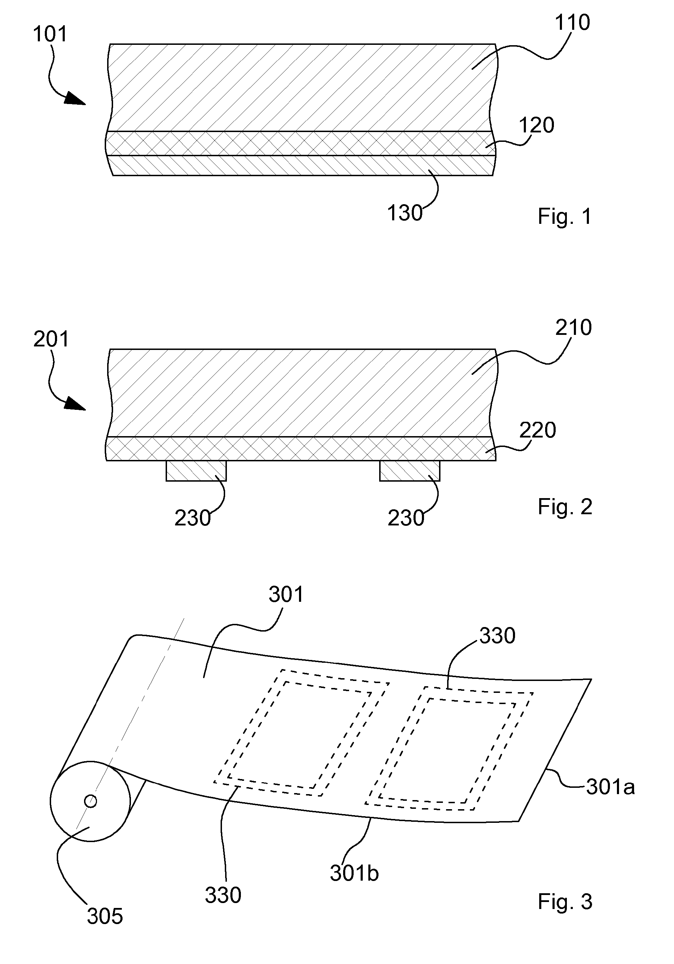

Fig. 1 shows a sectional view of a coated printed packaging film 101 according to the present invention, in particular of a full coated film. The main film structure 110 represents either a monolayer or a multilayer structure; layer 120 represents the ink layer printed over the whole food side of 110 and 130 is the coating obtained by applying the present compositions onto the whole surface of the printed layer 120.
Fig. 2 shows a sectional view of coated printed packaging film 201 according to the present invention, in particular of a framed coated film. The main film structure 210 represents either a monolayer or a multilayer structure; layer 220 represents the ink layer printed over the whole food side of 210 and 230 is the cross sectioned rectangular coating obtained by applying the present compositions only onto the sealing area of the printed layer 220.
Fig. 3 is a perspective view of a partially frame coated packaging film according to the present invention when unwound from a roll before entering the sealing station. In particular the present film 301 is unwound from the roll 305 and is presented with the outer non printed non coated side 301a upwards and the printed and partially coated food-side 301 b downwards. The coated framed area 330 has a rectangular shape. This area is intended to be sealed to a corresponding flange of a rectangular tray in a subsequent tray lidding station (not represented).

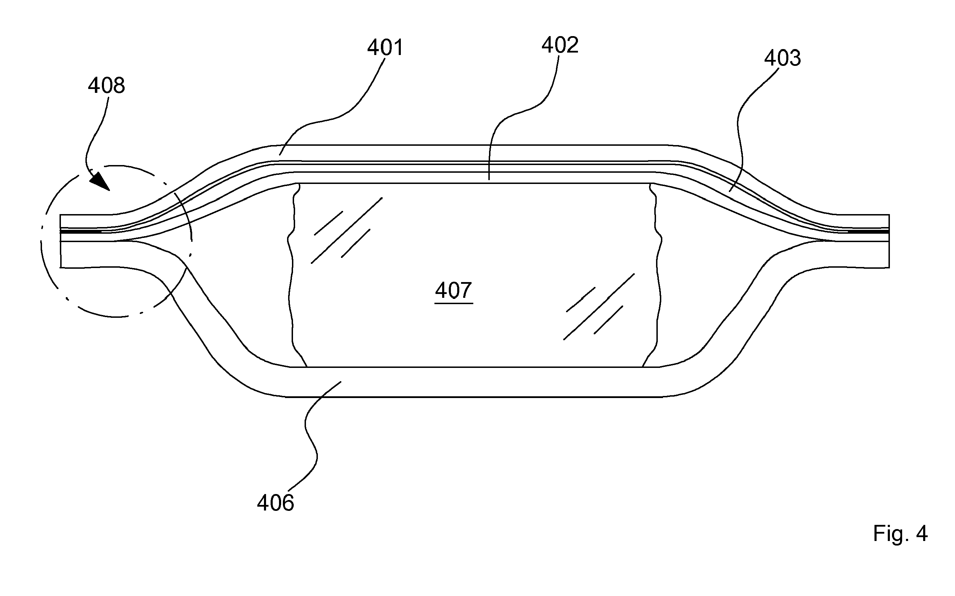

Fig. 4 is a view of an orthogonal section with respect to the base of the tray 406 along the major axis of a double lidded package according to EP690012 or W02006/087125. In particular, the film of the present invention 401 is superposed onto a non-barrier film 402 and both films are sealed along a sealing area 408 onto the flange of the tray 406. A product 407 is enclosed and a space 403 within which oxygen circulates is delimited by the two films 402 and 401.

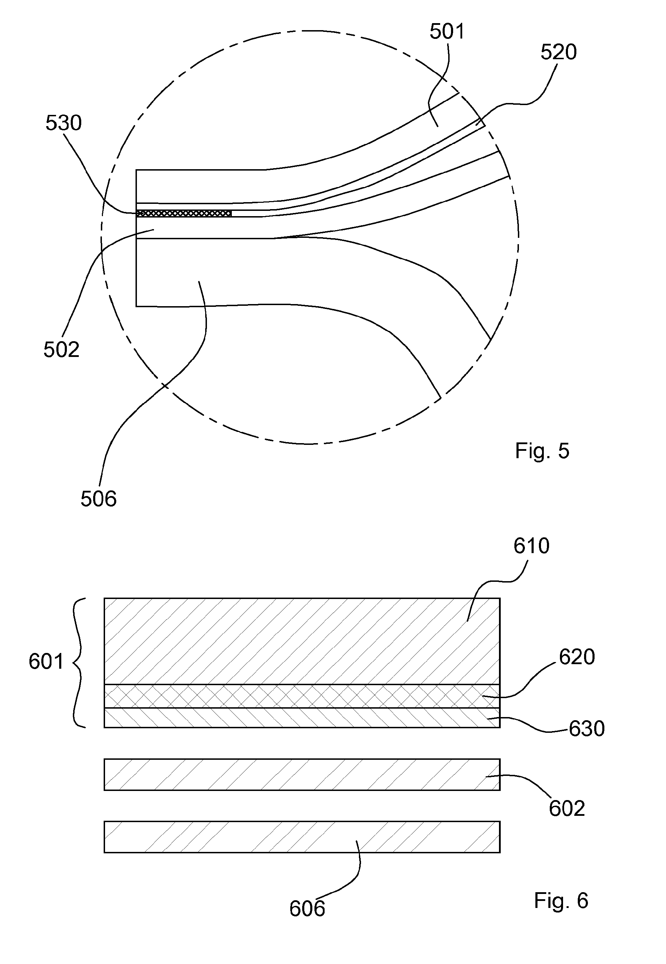

Fig. 5 is an enlarged view of a section of the sealing area 408 of the package of fig 4 (encircled area) in which the external barrier film 501 is full printed 520 onto the surface facing the second film and only coated in the correspondence of the sealing frame 530. This film is sealed onto the second non barrier film 502 through the heat sealable coating 530. In turns the non-barrier film 502 is sealed onto the flange of the tray 506. Thanks to the coating 530, the strength of the seal is really good notwithstanding the presence of ink printing 520 in the sealing area.
Fig. 6 is a schematic representation of the sequence of components in a double walled package according to EP690012 or W02006/087125 in which a full coated printed packaging film is used as outer film. In particular, the full printed full coated film 601 is placed in front of a non-barrier film 602, which in turns faces the tray 606.

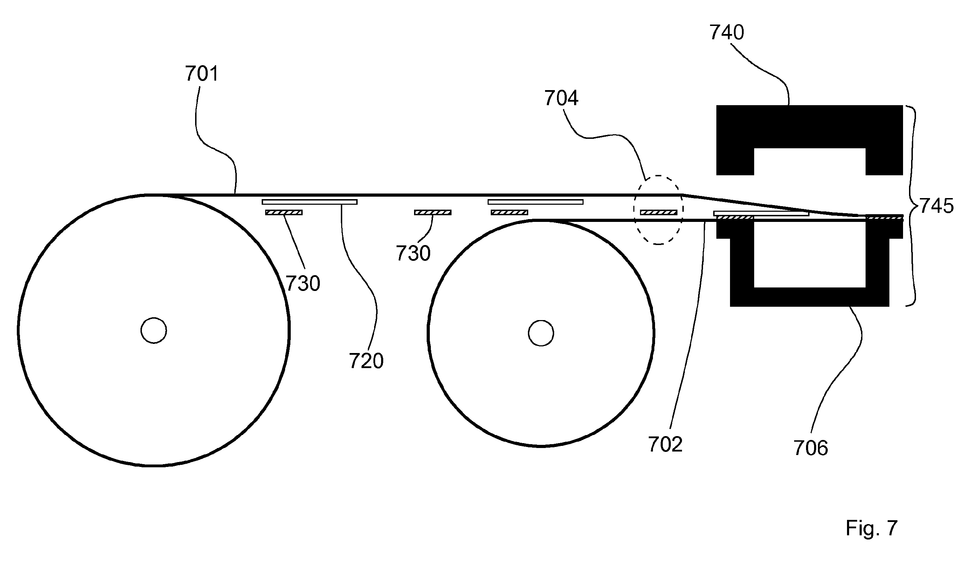

Fig. 7 is a scheme representing a possible process according to the present invention for the manufacture of the double lidded package described EP690012, in which the outer barrier film 701 according to the present invention and the inner permeable film 702 are unwound from different rolls and coupled to give the composite 704. The food side surface of the barrier film 701 is partially printed 720 and partially coated in the correspondence of the sealing areas 730. The composite 704 is then sealed to the tray 706 under the sealing bar 740 in the sealing station 745.

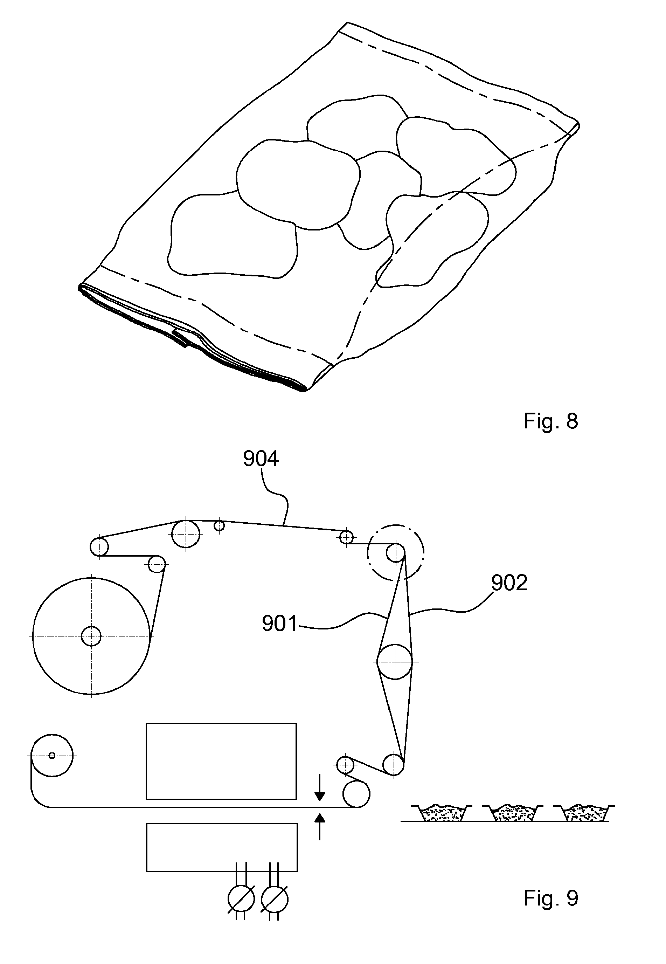

Fig. 8 is a representation of a double walled pouch as described in EP755875A1 comprising a film and a composite according to the present invention.
Fig. 9 is a schematic cross section of a possible packaging machine for carrying out the process as described in W02006/087125, in which a single supply roll and a composite 904 of a full coated full printed barrier packaging film 901 according to the invention and a non-barrier film 902, are used. As illustrated and according to the preferred process described in this document, the two films - stored wound up on the same roll - are separated with a pole to allow the proper gas admixture be introduced between them and, finally, superposed again before entering the sealing station.

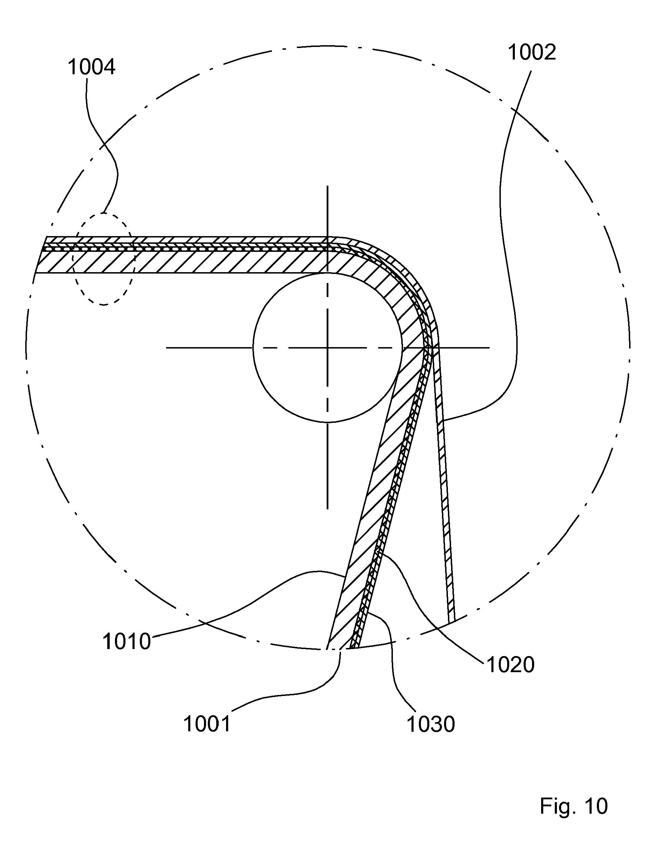

Fig. 10 is an enlarged view of the encircled section of fig. 9 where the separation of the two films 1001 and 1002 from the composite 1004, according to the process described in W02006/087125, is represented.

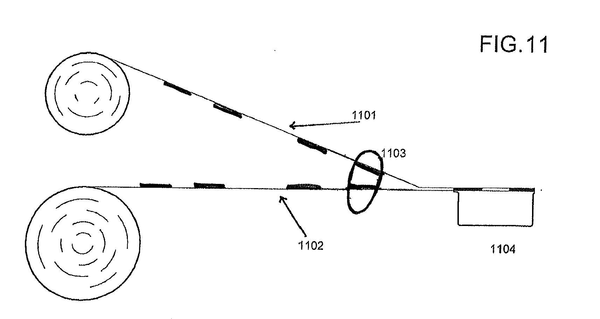

Fig. 11 is a scheme representing a possible process according to the present invention for the manufacture of a package in which a composite according to the third object of the present invention is used. Specifically, the first film 1101 is partially printed and the second film 1102 is partially coated in the correspondence of the sealing area. Said films are unwound from different rolls and coupled to give the composite 1103, that is then sealed to the tray 1104 in correspondence to the sealing area.

It is a second object of the present invention a composite of two packaging films comprising
a first film according to the first object of the present invention, having a first at least partially ink printed over coated surface, and
a second film,
wherein, in the composite, said first at least partially ink printed over coated surface of the first film faces the second film.

Specifically, said second object of the present invention is a composite of two packaging films comprising:
a first film according to the first object of the present invention, and
a second film,
said first film having a first surface which is intended to be sealed to a second surface of the second film through a sealing area said first surface being ink printed at least in the correspondence of the sealing area and being over coated at least in the correspondence of the same sealing area with a coating obtainable by applying a composition comprising an aqueous dispersion comprising (A) at least one thermoplastic resin; (B) at least one dispersing agent; and (C) water,
wherein in the composite said first ink printed over coated surface of the first film faces the second surface of said second film.

The composite described above can be assembled by coupling the two films in the correct sequence - namely facing said first ink printed and coated surface of the film according to the present invention to the second surface of the second film - the two films being unwound from two distinct rolls.

As an alternative, the composite originates from the two films unwound form the same roll.

In the composite described above, preferably the first film is a barrier film while the second film is a non-barrier film. Preferably one or both the films of said composite are heat shrinkable.

The composite may comprise two films according to the present invention.

It is a third object of the present invention a composite of two packaging films comprising
a first film comprising two outer surfaces, in which at least one of said outer surfaces is a first printed surface which is ink printed at least in the correspondence of a portion of said surface , and
a second film, comprising two outer surfaces, in which at least one of said outer surfaces is a second surface which is at least partially over coated with a coating obtainable by applying a composition comprising an aqueous dispersion comprising (A) at least one thermoplastic resin; (B) at least one dispersing agent; and (C) water,
wherein said dispersing agent (B) comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer, and wherein, in the composite, the first at least partially ink printed surface of said first film faces the corresponding second at least partially over coated second surface of said second film.

The composite described above can be assembled by coupling the two films in the correct sequence - namely facing said first ink printed surface of the print film with said coated surface of the second - the two films being unwound from two distinct rolls.

As an alternative, the composite originates from the two films unwound form the same roll.

In the composite described above, preferably the first film is a barrier film while the second film is a non-barrier film. Preferably one or both the films described above are heat shrinkable.

Preferred is a composite according to the third object of the present invention, wherein said second surface of the second film is coated over the entire surface.

Preferred are composites according to the second or third object of the present invention wherein said first film is gas-barrier and said second film is gas-permeable.

Also preferred are the composites according to the second or third object of the present invention in which also the second surface of the second film is at least partially ink printed and/or over coated.

For the detailed description of the characteristics and the manufacturing process of the two packaging films forming part of the composite that is the third object of the present invention, i.e. the ink printed film and the coated film, reference is made to the description of said films as reported above.

A fourth object of the present invention is a supply roll of the composites according to the present invention.

In the supply roll, the present coating advantageously prevents antifog migration between the adjacent surfaces of films that are in tight contact in the roll.

Preferably one or both the films of the present supply roll are heat shrinkable.

It is a fifth object of the present invention a kit for packaging comprising at least a first film according to the first object of the present invention or a composite according to the second or third object of the present invention; preferably said kit for packaging comprising a first film according to the first object of the present invention or a composite according to the second or third object of the present invention, and a support.

In other word said kit may comprise a film and another film, a film and a composite, a composite and another composite, a film and a support, a, composite and a support..

It is a sixth object of the present invention a printed package comprising at least a printed packaging film according to the first object of the present invention or a composite according to the second or third object of the present invention and a product packaged therein.

Preferably in said package the first at least partially printed surface of the film is at least partially sealed to a second surface of a packaging article along a sealing area, wherein the sealed area comprises a coating, obtainable as described above, or products derivable from said coating after sealing.

The printed package may comprise only one film according to the present invention or more than one.

In one embodiment the printed package only comprises one film according to the present invention.

In another embodiment the printed package includes in addition to the one film according to the present invention a second film, which can be the same or different. Preferably, the second film is different.

In case of a single film according to the present invention, the second surface to which said printed and coated first surface is sealable may be a surface (the same first surface or the other one) of the same film - which will be sealed onto itself providing flexible containers such as bags, pouches etc ... - or may be a surface of a support, thus providing for instance tray lidded packages. These packages are also referred herein as single walled packages The single film according to the present invention may be monolayer or multilayer, gas barrier or non-barrier, oriented or non-oriented, heat-shrinkable or not, annealed or not, printed on both the outer surfaces or not etc.. depending on the final use and packaged product

In another embodiment the printed package includes in addition to the one film according to the present invention a second film, which can be the same or different. Preferably, the second film is different.

The two films may be coupled in a composite. The composite may be wound up on a single roll.

When coupled in a composite, the at least one printed and coated surface is directly faced to the second surface of the second film to which it is sealable. Both the facing surfaces may be printed and coated according to the present invention, but preferably only one.

Similarly as above, also the composite can be sealed to itself or to a support thus providing the so called double walled packages, i.e. double walled pouches as those described in EP755875A1 or double walled bags and double walled tray lidded packages as those described in EP690012 or WO2006/087125.

The films of the composite according to the present invention may be - one or the other or both - printed and coated according to the present invention. These films may be - one or the other or both - monolayer or multilayer, gas barrier or non-barrier, oriented or non-oriented, heat-shrinkable or not, annealed or not, printed on both the outer surfaces or not etc.. depending on the final use and packaged product

Particularly preferred packages according to the present invention are the double walled packages for fresh meat products, especially fresh red meat products, described in EP690012, packages containing a relatively high content of gaseous oxygen, and having an outer film according to the present invention which is impermeable to gaseous oxygen. The high O₂ content of the package substantially eliminates discoloration and extends the shelf life of the meat product.

As an alternative, the inner permeable film of the double walled package described in W02006/087125 may be the printed coated film according to the present invention or both the inner and outer films.

All the embodiments and variants of this package described in EP690012 and W02006/087125, incorporating at least a film according to the present invention, are within the scope of the present patent application.

It is thus an embodiment of the present invention a package comprising
a composite according to the present invention, and
a meat product,
said composite comprising a first gas-barrier film and a second gas-permeable film,
said first film having a first surface which is sealable to a second surface of the second film through a sealing area,
said first surface being ink printed at least in the correspondence of the sealing area and being over coated at least in the correspondence of the same sealing area with a coating obtainable by applying a composition comprising an aqueous dispersion comprising (A) at least one thermoplastic resin; (B) at least one dispersing agent; and (C) water, wherein in the composite said first ink printed over coated surface of the first film faces the second surface of said second film,
said composite being sealed to itself along the sealing area thus completely and hermetically enclosing the product said sealed composite defining a confined volume within the package containing at least an amount of oxygen effective to inhibit discoloration of the packaged meat product, and further
defining an oxygen-permeable region between the oxygen-permeable film and the oxygen-impermeable film, wherein in the package the first film is the outermost and the second film is the innermost with respect to the product. Examples of packages according to the above embodiment are bags and pouches, for example the double walled pouches and bags described in EP755875A1 or in EP690012 (see Fig. 3).

Optionally the packages according to the above embodiment may comprise other packaging components commonly used in the field of food packaging, especially of meat packaging, such as rigid or semi-rigid supports (i.e. trays or flat sheets), or such as adsorbent pads and others.

If the support member is in direct contact with the meat product, preferably the support member is O₂-permeable, in order to reduce or substantially eliminate discoloration of any portion of the surface of the meat product in direct contact with the support member.

It is another embodiment of the present invention a package comprising
a composite according to the present invention,
a meat product, and
a support,
said composite comprising a first gas-barrier film and a second gas-permeable film,
said first film having a first surface which is sealable to a second surface of the second film through a sealing area,
said first surface being ink printed at least in the correspondence of the sealing area and being over coated at least in the correspondence of the same sealing area with a coating obtainable by applying a composition comprising an aqueous dispersion comprising (A) at least one thermoplastic resin; (B) at least one dispersing agent; and (C) water, wherein in the composite said first ink printed over coated surface of the first film faces the second surface of said second film,
said composite being sealed to the periphery of the support along the sealing area thus completely and hermetically enclosing the product, said sealed composite defining a confined volume within the package containing at least an amount of oxygen effective to inhibit discoloration of the packaged meat product, and further defining an oxygen-permeable region between the oxygen-permeable film and the oxygen-impermeable film, wherein in the package the first film is the outermost and the second film is the innermost with respect to the product. The oxygen permeable region may comprise particulate such as silica or food starch, but preferably, does not comprise any particulate.

The outer barrier film according to the present invention is positioned with the printed and coated side facing the food product with the interposition of the non-barrier film, as illustrated in Fig. 4, 5 and 6.

The support member will have a food contact outer surface that is heat-sealable to the oxygen-permeable film of the composite lidding film. Therefore if the material used for the bulk structure is not heat-sealable it will be necessary to either laminate it with a mono- or multi-layer film comprising an outer heat-sealable layer or coextrude it with one or more layers including an outer heat-sealable layer. Alternatively it would be possible also to coat it, at least on the periphery of the support or on the flange of the tray, with a heat-sealable material.

However the coating according to the present invention may provide the required sealability by itself.

The support member will preferably provide a barrier to the passage of oxygen in order to maintain the desired high oxygen environment within the package. Thus they can be formed from a bulk material which itself has oxygen-barrier properties, or said bulk material is not oxygen-impermeable but is laminated with an oxygen-barrier film or they can be formed from a bulk material that is not an oxygen-barrier material but whose thickness is however high enough to drastically limit gas exchange with the environment.

Suitable materials from which support members or the bulk thereof, can be formed include styrene-based polymers, e.g. polystyrene and high impact polystyrene, nylons, polypropylene, high density polyethylene, polyesters, e.g., polyethyleneterephtalate and polyethylenenaphthalenate homo- and copolymers, polyvinylchloride, and the like materials.

In general, any suitable product support member may be used, either alone, or optionally in combination with one or more supplemental product support members. Preferably, at least one member selected from the group consisting of the product support member, and the supplemental product support member, comprises a tray. Preferably, the tray comprises a thermoformed foam sheet, or a thermoformed or molded rigid sheet tray, or any other support member which may be preformed or formed in-line during packaging. In general, the product support member may comprise any suitable material as known to those of skill in the art, such as polyolefin; preferably, the support member comprises at least one member selected from the group consisting of polyvinylchloride, high density polyethylene, polystyrene, polypropylene, polyethylene terephthalate, and cellulose; more preferably, tray comprises polystyrene; still more preferably, tray comprises polystyrene foam.

In general, the gas-impermeable film in the package according to the present invention can be a monolayer film or a multilayer film. Preferably, the gas-impermeable film is a multilayer film, preferably comprising from 2 to 20 layers; more preferably, from 3 to 10 layers; and more preferably, from 4 to 6 layers.

In general, the gas-impermeable film can have any total thickness desired, so long as the film provides the desired properties for the particular packaging operation in which the film is used. Preferably thickness of the oxygen-impermeable film will be lower than 50 microns, more preferably lower than 25 microns, even more preferably lower than 20 microns.

In general, the gas-impermeable film can comprise any polymer, or combination of polymers, so that the film has an oxygen transmission rate of from about 0,1 to 500; preferably, from about 2 to 100; more preferably, from about 2 to 30; still more preferably, from about 5 to 10 cc/m² day atm.

Preferably, the gas-impermeable film comprises, as the oxygen-barrier composition, at least one member selected from the group consisting of polyvinyl chloride ("PVC"), polyvinylidene chloride ("PVDC"), ethylenelvinyl alcohol copolymer ("EVOH"), polyethylene terephthalate ("PET"), and polyamide; more preferably, the gas-impermeable film comprises at least one member selected from the group consisting of PVDC and EVOH; still more preferably, the gas-impermeable film comprises EVOH. The above-disclosed polymers may be present alone in a single layer of a single film layer, or may be present in admixture with one or more additional polymers.

The first and second film of the present package may be - the one or the other or both - mono- or biaxially oriented, preferably they are both biaxially oriented.

The first and second film of the present package may be - the one or the other or both - heat-shrinkable, preferably they are both heat-shrinkable.

Shrinkability of each of the two films is tailored by the skilled person in order to avoid the final double walled package to be crushed or distorted or damaged along the seal, because of a too high total tension exerted by the shrunk films onto the sealing flange.

Preferably, in the double walled package according to the present invention, the seal strength between the films and between the internal film and the support is higher than the strength exerted by the shrunk films onto the respective sealing areas.

The gas-permeable film in the package according to the present invention can be a monolayer film or a multilayer film. More preferably, the gas-permeable film is a multilayer film. In general, this multilayer film can comprise from 2 to 20 layers; preferably, from 3 to 10 layers; and more preferably, from 4 to 8 layers.

In general, the O₂-permeable film can have any total thickness desired, so long as the film provides the desired properties for the particular packaging operation in which the film is used. Preferably, the film used in the present invention has a total thickness preferably lower than 50 micron, more preferably lower than 30 micron, even more preferably lower than 20 micron.

Preferably, the gas-permeable film comprises a polymer or combination of polymers so that the film an OTR of at least 2,000 cm³ /m².d.atm when measured at 23 °C and 0 % of relative humidity, such as for instance at least 2,500 cm³ /m².d.atm or at least 3,000 cm³ /m².d.atm or at least 3,500 cm³ /m².d.atm, and more preferably at least 4,000 cm³ /m².d.atm, such as for instance at least 5,000 cm³ /m².d.atm or at least 8,000 cm³ /m².d.atm or at least 10,000 cm³ /m².d.atm, measured according to ASTM D-3985

Examples of suitable materials for gas-permeable film include such polyolefins as ethylene/vinyl acetate copolymer, ionomer, ethylene/alpha-olefin copolymer, especially homogeneous ethylene/alpha-olefin copolymer, low density polyethylene, plasticized polyvinyl chloride, SSD-351 (TM) stretch olefin film, etc.

Materials with still higher permeation rates are available and could provide an extended color life in areas of film to-meat contact, but higher permeation is not generally necessary.

In general, the gas-permeable film may comprise at least one member selected from the group consisting of polyolefin, and ionomer, e.g., SURLYN (TM) ionomer resin, obtainable from DuPont; preferably, the gas-permeable film comprises at least one member selected from the group consisting of polyolefin; more preferably, ethylene/vinyl acetate copolymer ("EVA"), low density polyethylene ("LDPE"), ultra-low density polyethylene ("ULDPE"), homogeneous ethylene/alpha-olefin copolymer, ethylene/n-butyl acrylate copolymer ("EnBA"), ethylene/methyl acrylate copolymer ("EMA"), and polymethylpentene. The above-disclosed polymers may be present alone as a single film layer, or may be present in a composition comprising one or more additional polymers substantially uniformly blended therewith.

A meat product can be packaged in a variety of manners. For example, a product-containing package according to the present invention may be prepared by placing a meat product on a supporting tray; applying the permeable film from a first roll over the meat product, using conventional processes such as vacuum skin packaging or by sealing it to the tray at a perimeter thereof, applying the impermeable film from another roll over the permeable film, and sealing it to the tray at the perimeter thereof. Suitable VSP films and processes are for example mentioned in EP2055651.

Preferably however both the films are wound up in the same roll and the packaging process is performed according to W02006/087125.

It is thus an object of the present invention a process for the manufacture of a fresh meat package according to the above last embodiment which comprises

placing the meat product on the support and

closing the package under a high oxygen-content atmosphere by means of the composite according to the invention, comprising an outer oxygen-barrier film and an inner, food-contact, oxygen-permeable film,
said composite film being positioned over the meat product and heat-sealed to the periphery of the support so as to bind a confined volume within the package containing at least an amount of oxygen effective to inhibit discoloration of the packaged meat product,
said composite being unwound from a single supply roll, separated into its two components following unwinding and before entering into the lidding station, components which are then superposed again one over the other before the sealing step.

Lidding machines that can suitably be adapted to run the process of the present invention include for instance Multivac 400 and Multivac T550 by Multivac Sep. GmbH, Mondini E380, E390 or E590 by Mondini S.p.A., Ross A20 or Ross S45 by Ross-Reiser, Meca-2002 or Meca-2003 by Mecaplastic, the tray lidding machines manufactured by Sealpac and the like machines.

In a preferred embodiment the lidding films, or at least the inner oxygen-permeable one, are biaxially oriented and heat-shrinkable and the packaging process involves a heat-treatment to get the shrink thereof and cure any wrinkles in the lids. Such a heat-treatment may be a separate step following the heat-sealing one or - preferably - is part of the heat-sealing step, i.e., the temperature reached in the sealing station, due to the presence of the heat-sealing frame, is sufficient to get the desired shrink of the lid(s).

During packaging, the interior volume within product-containing packages is preferably flushed with a high-O₂-content gas during application of one or both of gas-permeable film and impermeable film. This relatively high O₂ content of the flushing gas serves to keep the meat product "bloomed" (e.g., fresh red meats are red when they are bloomed), in order to prevent discoloration of meat product, so that packaged meat product is favorably received by the consumer. The gas flushing step can be performed during the application of O₂-permeable film and/or during the application of gas-impermeable film, in accordance with conventional and well-known procedures. In general, the flushing gas comprises gaseous oxygen in an amount of at least 60 volume percent, based on the total gas volume of the flushing gas; preferably, the flushing gas comprises O₂ at a level of at least about 80 volume percent. Generally the flushing gas comprises gaseous oxygen in admixture with another gas. Although the flushing gas can comprise gaseous oxygen in an amount of about 100 volume percent, based on total gas volume within the package, preferably the flushing gas comprises gaseous oxygen in an amount of from about 80 volume percent to 99 volume percent, based on total gas volume within the package, with the balance or remainder of the gas comprising at least one member selected from the group consisting of gaseous nitrogen and gaseous carbon dioxide. A lower volume percent of O₂ can be present, if a shorter shelf life is acceptable. With respect to the mass of the packaged meat product, preferably, the flushing gas is present in the package at a level of from about 1-5 cc/g of product; more preferably, from about 1-2 cc/gm.

Optionally, the package may further comprise a soaker pad to absorb product drip loss, and may further prevent or reduce discoloration of meat product.

The printed film of the present invention may be used to package a variety of products, preferably food products. In a preferred application, the present film is used for packaging fresh meat.

Fresh meat that can advantageously be packaged by the method of the present invention includes fresh red meat, fresh poultry, with or without skin, fresh pork, and fresh fish; preferably the packaged meat will be fresh red meat (e.g. fresh beef, fresh lamb, fresh horse, and fresh goat), fresh pork and fresh poultry.

If the printed coated film is provided in a roll form, then the packager unrolls the film as needed for the packaging application.

As an alternative, the printed uncoated film is provided in a roll form, then the packager unrolls the film, coats the food side printed surface, at least in the correspondence of the intended sealing area and uses it in the specific packaging application.

A bag or a pouch for packaging the food product may be made from the printed coated film by sealing the film to itself in a selected region, as is known in the art. Useful bags include an end-seal bag, a side-seal bag, an L-seal bag (i.e., sealed across the bottom and along one side with an open top), or a pouch (i.e., sealed on three sides with an open top). Additionally, lap seals may be employed. After forming the bag, the product may be inserted into the bag, and the open end of the bag sealed to enclose the product.

The printed coated film may also be wrapped around a product and heat sealed to form a package enclosing the product. If the printed coated film is formed of a heat-shrinkable film, the resulting bag may be heated to shrink the film around the product.

The printed coated film may also be used as a transparent wrap to cover and secure a food product that rests on a tray, that is, the film may be used as a tray overwrap. The printed coated film may be adapted for use as a complete tray overwrap namely, where the film is capable of completely covering the packaged food product and being sealed onto itself to complete the packaging closure. Further, the printed coated film may be adapted for use as a lid-seal overwrap, in which case the film is adapted for adhering, sealing, or clinging to the tray to complete the packaging closure. In the lid-seal application, the printed coated film may be exposed to heat associated with a film heat-seal operation. In such a case, the printed image of the coated film includes an ink that is preferably capable of withstanding the temperature exposure associated with the heat seal.

The tray upon which the food product rests may be a flat sheet (i.e., without a perimeter lip) or may include a perimeter lip that extends above the base of the tray, as is known in the art.

Preferably, the perimeter lip extends sufficiently so that the printed coated film as a tray overwrap does not contact a substantial portion of the food product being packaged on the tray.

A further object of the present invention is a method to improve the strength of the sealing between a packaging film, ink printed at least in the sealing area, and a packaging article which comprises coating at least said ink printed sealing area of the packaging film with a composition comprising an aqueous dispersion comprising (A) at least one thermoplastic resin; (B) at least one dispersing agent; and (C) water. This method provides for a strong seal between the surfaces having a printed image trapped therein, said seal strength being higher than 100 g/25 mm, preferably higher than 200 g/25 mm, more preferably higher than 300 g/25 mm, even more preferably higher than 400 g/25 mm, said sealed strength being measured with the test described herein below.

The present invention is further illustrated by way of the following examples.

### Examples

In these examples packages according to the present invention as illustrated in fig 4 were manufactured. Rigid clear rectangular shaped (1500 mm x 2300 mm) trays made of polypropylene, 550 microns thick, were used As the composite lid, a combination of the films reported in the following tables 1 and 2 was employed

**Table 1: Film 1: gas-barrier, ink printed and coated according to the present invention**

| layer 1 (5,0 µm) | layer 2 (2,2 µm) | layer 3 (1,7 µm) | layer 4 (2,0 µm) | layer 5 (1,7 µm) | layer 6 (2,2 µm) | layer 7 (5,0 µm) |
|---|---|---|---|---|---|---|
| LLDPE2 50% | LLDPE3 100% | EMAA-Zn/PA 20% | PA-6\12 4% | EMAA-Zn/PA 20% | LLDPE3 100% | LLDPE2 50% |
| MDPE 30% | | | EVOH 96% | | | MDPE 30% |
| LLDPE1 20% | | PA-6\66 80% | | PA-6\66 80% | | LLDPE1 20% |

Film 1 was manufactured according to a conventional extrusion and double bubble process. After slitting and during ply separation it was corona treated on the surface printable, coated and sealed (generator set at 20,000 W to get surface tension of 42 dynes/cm). Printing was performed using a Flexo press with central impression drum. An image was printed on the corona treated surface of Film 1. A Ten station Miraflex AM press was used for the production of the subject sample. Press stations from 1 to 9 were used to apply the inks needed to create the target image; press station 10, the last one, was used to apply the water based heat sealable composition according to the present invention in the correspondence of the rectangular sealing area.

Printing ink used was a nitrocellulose / polyurethane type solvent based, supplied by Sun Chemical under the tradename of SunProp. The water based heat sealable coating composition used was Aquaseal X 2200 supplied by Paramelt (pH: 11.1; Appearance: White liquid; Viscosity 150 (mPa .s at 23 °C). The composition was applied in the printed areas within the sealing area only.

Anilox roller used to apply the coating was engraved at 80 lines/cm, cells volume was 22 cm³/m². Coating grammage ranged from 1.5 to 2 g/m². The photopolymer plate used to apply the coating was the CyrelFast supplied by DuPont. Press running speed was 100 m/min; drying conditions 70°C at the printing stations, and 45°C in the tunnel. Table 2: Film 2 gas-permeable non-printed, non-coated film

**Table 2**

| layer 1 (2,6 µm) | layer 2 (4,0 µm) | layer 3 (2,5 µm) | layer 4 (4,0 µm) | layer 5 (2,6 µm) |
|---|---|---|---|---|
| LLDPE1 30% | LLDPE2 100% | EVA 100% | LLDPE2 100% | LLDPE1 30% |
| EVA 17,5% | | | | EVA 17,5% |
| MDPE 17,5% | | | | MDPE 17,5% |
| LLDPE2 35% | | | | LLDPE2 35% |

Film 2 was manufactured according to conventional extrusion and double bubble process, ply separated to provide a single web film from the collapsed bubble.

The resins used for manufacturing Film 1 and Film 2 are summarized in Table 3:

**Table 3**

| | Tradename / Supplier | Chemical Nature | Analysis |
|---|---|---|---|
| LLDPE1 | AF5841 LL 1.5 percent sylobloc 47 as AB Tosaf | Fatty Acid Esters and Silica in Polyethylene, Linear Low Density | Density 0,92 g/cm3, Melt Flow Rate (Cond. 190°C/02.16 kg (E)) 3 g/10 min |
| EVA | LD362BW ExxonMobil | EthyleneNinyl Acetate Copolymer | Comonomer content 4,5 %, Density 0,9275 g/cm3, Melt Flow Rate (Cond. 190°C / 02.16 kg (E)) 2g/10 min, Melting Point 104 °C |
| MDPE | DOWLEX SC 2108G DOW | Polyethylene, Medium Density Ethylene/Octene Copolymer - Linear, Ziegler/Natta | Density 0,935 g/cm3, Melt Flow Rate (Cond. 190°C / 02.16 kg (E)) 2,6 g/10 min, Melting Point 128°C, |
| LLDPE2 | DOWLEX 2045S DOW | Polyethylene, Linear Low Density Ethylene/Octene Copolymer - Linear, Ziegler/Natta | Density 0,92 g/cm3, Melt Flow Rate (Cond. 190°C / 02.16 kg (E)) 1 g/10 min, Melting Point 124°C |
| LLDPE3 | Plexar PX3227X09 LyondellBasell Industries | Maleic Anhydride-Modified Polyethylene, Linear Low Density Blend - Rubber-Modified | Density (cond D1505) 0,913 g/cm3, Melt Flow Rate (Cond. 190°C / 02.16 kg (E)) 1,7 g/10 min, Melting Point 124°C |
| EMAA-Zn/PA | SURLYN AM7927 DuPont | Zinc Neutralized Ethylene Methacrylic Acid Copolymer + Polyamide - | Comonomer content 11 %, Density 0,98 g/cm3, Melt Flow Rate (Cond. 190°C / 02.16 kg (E)) 11,5g/10 min, Melting Point 94 °C, Moisture content 750 %, Vicat softening point 71 °C |
| PA-6\66 | ULTRAMID C33 01 BASF | Polyamide-6/66-Poly(caprolactam/hexamethylenediami ne/adipic acid) | Density 1,13g/cm3, Melting Point 196°C |
| PA-6/12 | GRILON CF6S EMS- Grivory | Polyamide - 6/12-Poly(capro/laury)lactam | Density 1,05 g/cm3, Melt Flow Rate (Cond. 190°C / 02.16 kg (E)) 5,75 g/10 min, Melting Point 130 °C, Viscosity Solution 1,79 mPA.sec |
| EVOH | SOARNOL AT4403 Nippon Gohsei | Hydrolyzed Ethylene/Vinyl Acetate Copolymer - More than 40 mole % Ethylene | Comonomer content 44 %, Crystallization point 144 °C, Density 1,14 g/cm3, Melt Flow Rate (Cond. 210°C / 02.16 kg (V)) 3,5 g/10 min, Melting Point 164°C |

Film 1 and Film 2 were coupled to provide the composite according to the present invention wherein the corona treated, printed and coated surface of Film 1 was directly faced with an outer surface of Film 2. Coupling was performed with a conventional unwinding/rewinding equipment. Film 1 was positioned on unwinding unit 1; Film 2 was positioned on unwinding unit 2 and the two films were wound together to get the double wound web on a single roll. After slitting to the required width, the composite was sealed onto the flange of the above described trays to give the package 1 according to the present invention, with the following equipment and conditions: Sealpac A7 tray sealing unit equipped with a hot bar sealing frame for tray size 150mm X 230mm. Machine setting: Seal T=145°C, Seal time = 1 sec, Insulator T = 75°C, Vacuum = 200 mbar, Gas = 700 mbar, thus providing package 1 according to the present invention.

The following comparative films 3, 4, 5 and the reference films 6 and 7 were manufactured exactly as described for Film 1. Comparative films 3 to 5 were coated using for the coating the conventional, non-aqueous, non-polyolefin based compositions reported in Table 4

**Table 4**

| Comparative film | Coating composition: tradename and supplier | Notes |
|---|---|---|
| 3 | THERMOCOLLANT VERNIS WP22006F Flint Group | Ethanol /ethyl acetate based |
| 4 | TERMOS. APP VARNISH code 909020243 Sun Chemical | 49-70% 1-propoanol, B.p >65 °C, water insoluble; specific weight 2,673 kg/l |
| 5 | 2K ETOH AL ROTO Diluting varnish code: W020.3101; BASF | Synthetic resins; solvent Ethanol, for flexo, roto applications; polyisocianate in ethyl acetate |
| | Hardening agent 32/67 A.E. | |
| | Code: WP62.014I | |
| 6 | No printing, no coating | REFERENCE |
| 7 | Printing, no coating | REFERENCE |

Films 3, 4, 5, 6 and 7 were than coupled with the same Film 2 described above and used as composites for manufacturing the corresponding Comparative packages 3, 4 5, and Reference 6 and 7 according to the same process and conditions described for Package 1.

The sealing strength of the resulting seal package 1 according to the present invention and of comparative packages 3, 4, 5, and reference packages 6 and 7 were measured according to the following internal test.

A representative sample of the seal is cut from the sealed package so that the lid may be pulled from the support member, for example, using an Instron tensile tester under specified conditions. A higher maximum force attained before failure indicates a stronger seal strength.

In particular 4 rectangular samples for each rectangular package were cut, 2 in the middle of the long sides, the other 2 in the middle of the short sides of the rectangular flange. Each sample is made of a piece of the barrier film, a piece of the permeable film and a piece of the tray. The upper and lower films are manually separated until the lower film may be fixed into the lower clamp of a dynamometer, and the upper film into the upper one, taking care that the area to be tested lies in the middle of the two clamps and that an adequate tensioning between the two extremities of the fixed sample is obtained; the seal strength is then measured. The test conditions were the following:
Sample width 2.54 cm, Instrument Instron Dynamometer, testing temperature and RH: 23°C, 50% RH, jaws separation speed: 300mm/min; distance between the upper and lower jaws: 5 cm; sample conditioned 24h at 23°C,
50% RH before testing. The reported value express the maximum strength recorded during the seal opening and were calculated as median value of 4 samples per package and 20 packages for each kind of package (1 , 3 ,4, 5, 6 and 7).

In the following table 5, measured seal strength values are reported:

**Table 5**

| Sample (Package) | Seal strength (g / 25 mm) |
|---|---|
| 1 | 540 |
| 3 | < 65 |
| 4 | < 65 |
| 5 | < 65 |
| 6 | 780 |
| 7 | < 65 |

As can be seen, package 7 in which a printed image is trapped between the two films and no coating is present, shows a very weak seal, not suitable for use. The package 1 according to the present invention shows very high values of seal strength with respect to the comparative packages 3-5, in which conventional non aqueous, non-polyolefin based coatings were used. Thanks to the present coating, the seal strength of package 1 is comparable with that of the reference package 6, in which no impairing ink printed image is present in the sealing area. Accordingly with such good seal strength values, the packages of the present invention also report good hermeticity. The packages 1 according to the present invention were also evaluated for hermeticity.

In particular, hermeticity of the seals was evaluated according to this internal test: the packages were introduced in a closed water tank. Vacuum was created in the headspace of the water tank and the value of the pressure (bar) inside the tank when bubbles start to escape the closed packages was recorded. Pressure values above 0.4 bar - internal standard threshold value for acceptability - were recorded for the present packages 1.

The present packages were also evaluated for their antifog properties. A packaging film is defined as " antifog" if its internal surface allows the droplets of water to lay as a smooth and uniform layer allowing visual inspection of the packaged product. An internal test method was used to evaluate the antifog performance of the film. The antifog properties of the resulting seal package 1 according to the present invention was measured by manufacturing packages containing a pad completely soaked with water to simulate a wet product. The packages were then placed in a refrigerated cooler at 2-4°C. Three packages were prepared for the present film 1. The packages so prepared were then observed after 24 hours and scored by three panelists according to the following rating scale, ordered from very poor to excellent antifog properties:
score 1 for opaque layer of small fog droplets; score 2 for opaque or transparent layer of large droplets; score 3 for complete layer of large transparent droplets; score 4 randomly distributed or large transparent droplets; score 5 transparent film without visible water. The final antifog score is the average of three panelists judgment.

The packages according to the present invention scored values from 4 to 5.

## Claims

1. A printed packaging film comprising two outer surfaces, in which at least one of said outer surfaces is a first printed surface, which is ink printed at least in the correspondence of a portion of said surface and
which is over coated at least in the correspondence of the same printed portion with a coating obtainable by a composition comprising an aqueous dispersion comprising (A) at least one thermoplastic resin; (B) at least one dispersing agent; and (C) water,
wherein said dispersing agent (B) comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer.

2. A composite of two packaging films comprising
a first film according to claim 1, having a first at least partially ink printed over coated surface, and
a second film,
wherein, in the composite, said first at least partially ink printed over coated surface of the first film faces the second film.

3. A composite of two packaging films comprising
a first film according to claim 1 and
a second film,
said first film having a first surface which is intended to be sealed to a second surface of the second film through a sealing area said first surface being ink printed at least in the correspondence of the sealing area and being over coated at least in the correspondence of the same sealing area with a coating obtainable by applying a composition comprising an aqueous dispersion comprising (A) at least one thermoplastic resin; (B) at least one dispersing agent; and (C) water,
wherein in the composite said first ink printed over coated surface of the first film faces the second surface of said second film.

4. A composite of two packaging films comprising
a first film comprising two outer surfaces, in which at least one of said outer surfaces is a first printed surface which is ink printed at least in the correspondence of a portion of said surface , and
a second film, comprising two outer surfaces, in which at least one of said outer surfaces is a second surface which is at least partially over coated with a coating obtainable by applying a composition comprising an aqueous dispersion comprising (A) at least one thermoplastic resin; (B) at least one dispersing agent; and (C) water,
wherein said dispersing agent (B) comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer, and
wherein, in the composite, the first at least partially ink printed surface of said first film faces the corresponding second at least partially over coated second surface of said second film.

5. A supply roll of a composite according to anyone of claims from 2 to 4.

6. A kit for packaging comprising at least a first film according to claim 1.

7. A kit for packaging comprising a first film and a second film as defined under claims 2 to 4.

8. A kit for packaging comprising a first film according to claim 1 or a composite according to anyone of claims 2 to 4, and a support.

9. A printed package comprising a printed packaging film according to claim 1, or a composite according to anyone of claims 2 to 4, and a product packaged therein.

10. The package of claim 9 wherein the first at least partially printed surface of the film is at least partially sealed to a second surface of a packaging article along a sealing area, wherein the sealed area comprises a coating, obtained by applying a composition according to claim 1, or products derivable from said coating after sealing.

11. The package of claims 9 or 10 which comprises a composite according to anyone of claims 2 to 4 wherein said first surface of said first film is sealed to said second surface of said second film along a sealing area, wherein the strength of the seal between the two films in the sealed area is higher than 100 g/25 mm, preferably higher than 200 g/25 mm, more preferably higher than 300 g/25 mm, even more preferably higher than 400 g/25 mm, said strength being measured according to the test reported in the present description.

12. The package of anyone of claims 9 to 11 comprising
a composite according to anyone of claims 2 to 4 and
a meat product,
said composite comprising a first gas-barrier film and a second gas-permeable film,
said composite being folded and sealed to itself along the sealing area thus completely and hermetically enclosing the product, and optionally a support, said sealed composite defining a confined volume within the package containing at least an amount of oxygen effective to inhibit discoloration of the packaged meat product, and further defining an oxygen-permeable region between the oxygen-permeable film and the oxygen-impermeable film, wherein in the package the first film is the outermost and the second film is the innermost with respect to the product.

13. The package of anyone of claims 9 to 12 comprising
a composite according to anyone of claims 2 to 4,
a meat product, and
a support,
said composite comprising a first gas-barrier film and a second gas-permeable film,
said composite being sealed to the periphery of the support along the sealing area thus completely and hermetically enclosing the product, said sealed composite defining a confined volume within the package containing at least an amount of oxygen effective to inhibit discoloration of the packaged meat product, and further defining an oxygen-permeable region between the oxygen-permeable film and the oxygen-impermeable film.
wherein in the package the first film is the outermost and the second film is the innermost with respect to the product.

14. The package of claim 13 in which the support is a rigid tray and the composite is sealed along the peripheral flange of said tray along the sealing area.

15. A process for manufacturing a package in which a film, a composite a supply roll or a kit of films, according to anyone of claims 1 to 8, is used.

16. A process for manufacturing a package comprising
- providing a printed packaging film comprising two outer surfaces;
in which at least one of said outer surfaces is a first printed surface which is ink printed at least in the correspondence of the sealing area;
- providing a coating composition comprising an aqueous dispersion comprising (A) at least one thermoplastic resin; (B) at least one dispersing agent; and (C) water;
wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer;
- applying said coating composition at least in the correspondence of the sealing area of said first ink printed surface;
- providing a packaging article, having a second surface, and
- sealing said ink printed coated first surface to the second surface of the packaging article along the sealing area.

17. A process for manufacturing a package comprising:
- providing a printed packaging film comprising two outer surfaces;
in which at least one of said outer surfaces is a first printed surface which is ink printed at least in the correspondence of the sealing area;
- providing a packaging article, having a second surface;
- providing a composition comprising an aqueous dispersion comprising (A) at least one thermoplastic resin; (B) at least one dispersing agent; and (C) water;
wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer;
- applying said composition at least in the correspondence of the sealing area of the second surface of the packaging article,
and
- sealing said first ink printed surface of said film to said second coated surface of said packaging article along the sealing area.

18. Use of a composition comprising an aqueous dispersion comprising (A) at least one thermoplastic resin; (B) at least one dispersing agent; and (C) water,
wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer for coating at least a portion of an at least partially ink printed surface of a packaging film or a packaging article.

19. A method to increase the strength of the sealing between a first printed surface of a packaging film, which is ink printed at least in the sealing area, and a second surface of a packaging article which comprises coating, said first ink printed surface, and/or said second surface at least along the sealing area with a composition comprising an aqueous dispersion comprising (A) at least one thermoplastic resin; (B) at least one dispersing agent; and (C) water
wherein said dispersing agent comprises at least one carboxylic acid, at least one salt of at least one carboxylic acid, at least one carboxylic acid ester, or at least one salt of at least one carboxylic acid ester, more preferably the dispersing agent is an ethylene acrylic acid copolymer or an ethylene methacrylic acid copolymer, and
sealing said film to said packaging article along the sealing area.

20. The process of anyone of claims 15 to 17 or the use of claim 18 or the method of claim 19 in which said aqueous dispersion is further **characterized by**
- a pH of less than 12, and/or
- comprising at least one thermoplastic resin (A) selected from the group consisting of:
a) a thermoplastic resin (A) comprising a copolymer of ethylene with at least one comonomer selected from the group consisting of a C4-C20 linear, branched or cyclic diene, vinyl acetate, and a compound represented by the formula H2C=CHR wherein R is a C1-C20 linear, branched or cyclic alkyl group or a C6-C20 aryl group,
b) a thermoplastic resin (A) comprising a copolymer of propylene with at least one comonomer selected from the group consisting of ethylene, a C4-C20 linear, branched or cyclic diene, and a compound represented by the formula H2C=CHR wherein R is a C1-C20 linear, branched or cyclic alkyl group or a C6-C20 aryl group, and/or
- a volume average particle size lower than 5 microns, preferably ranging between 0.5 and 4.5, more preferably between 0.5 and 3.0, even more preferably between 0,5 and 1,5 microns, and/or
- a dry content ranging from 20% to 70%, preferably from 30% to 60 %, still more preferably from 40% to 55%.
